# EUROPEAN PATENT APPLICATION

(11) **EP 4 734 567 A1**
(43) Date of publication of application: **29.04.2026**
(21) Application number: 23942687.7
(22) Date of filing: 25.06.2023
(51) Int. Cl.: H04W 4/50

(54) **PERCEPTION TASK PROCESSING METHOD AND APPARATUS**

(71) Applicant: Beijing Xiaomi Mobile Software Co., Ltd., Beijing 100085 (CN)
(72) Inventor: HE, Zhibin, Beijing 100085 (CN); CHEN, Dong, Beijing 100085 (CN)
(74) Representative: Gunzelmann, Rainer
(86) International application number: PCT/CN2023/102227
(87) International publication number: WO 2025/000156

(57) **Abstract**

The present disclosure relates to the technical field of communications, and provides a perception task processing method and apparatus. According to the perception task processing method provided in embodiments of the present disclosure, a first network element can receive a perception service request sent by a user equipment (UE) by means of an access and mobility management function (AMP), the perception service request comprising perception service information of a perception task; first perception capability information of a perception node is acquired, the first perception capability information comprising a first perception capability feature of the perception node, and the first perception capability feature having a same feature type as a perception service feature in the perception service information; at least one target perception node among perception nodes is determined according to the first perception capability information; and the at least one target perception node is called to execute the perception task. The present disclosure provides a means of reporting perception capability in a 6G core network, so that the core network can accurately and efficiently select a perception node to provide a perception service for a specific perception task.

## Description

### TECHNICAL FIELD

The disclosure relates to the field of communication technologies, and in particular to a method and an apparatus for processing a sensing task.

### BACKGROUND

Sixth-generation (6G) communication has become a global research hotspot. In the 6G era, a wide range of new vertical application scenarios, represented by smart cities, smart transportation, intelligent manufacturing, and smart homes, will emerge continuously. These applications require communication devices and terminals to possess the capability to sense the physical world and mirror-map the digital world. The deep integration of communication systems with sensing artificial intelligence, and other multi-systems has become a new trend in technological development.

Currently, there is no suitable reporting method for sensing capabilities in the 6G network architecture, with the result that the core network cannot accurately and efficiently selecting sensing nodes to provide sensing services for specific tasks.

### SUMMARY

The present disclosure provides a method and an apparatus for processing a sensing task, which enables a core network to accurately and efficiently selecting sensing nodes to provide sensing services for specific tasks, by providing a reporting method for sensing capabilities in the 6G core network.

Embodiments of a first aspect of the present disclosure provide a method for processing a sensing task. The method is performed by a first network element, and includes:
receiving a sensing service request sent by a user equipment (UE) through an access and mobility management function (AMF), in which the sensing service request includes sensing service information of the sensing task;
obtaining one or more pieces of first sensing capability information of one or more sensing nodes respectively, in which the one or more sensing nodes include at least one of a plurality of UEs and a plurality of base stations, a piece of first sensing capability information includes a first sensing capability feature of a respective sensing node, and the first sensing capability feature has a same feature type as a sensing service feature in the sensing service information;
determining at least one target sensing node in the one or more sensing nodes according to the one or more pieces of first sensing capability information; and
calling the at least one target sensing node to execute the sensing task.

Embodiments of a second aspect of the present disclosure provide a method for processing a sensing task. The method is performed by a sensing node, and includes:
sending a piece of sensing capability information to a core network, so that a first network element determines at least one target sensing node from one or more sensing nodes according to pieces of sensing capability information, and calls the at least one target sensing node to execute the sensing task.

Embodiments of a third aspect of the present disclosure provide a method for processing a sensing task. The method is performed by a core network, and includes:
receiving a sensing service request sent by a user equipment (UE), in which the sensing service request includes sensing service information of the sensing task;
obtaining one or more pieces of first sensing capability information of one or more sensing nodes respectively, in which the one or more sensing nodes include at least one of a plurality of UEs and a plurality of base stations, a piece of first sensing capability information includes a first sensing capability feature of a respective sensing node, and the first sensing capability feature has a same feature type as a sensing service feature of the sensing service information;
determining at least one target sensing node in the one or more sensing nodes according to the one or more pieces of first sensing capability information; and
calling the at least one target sensing node to execute the sensing task.

Embodiments of a fourth aspect of the present disclosure provide a method for processing a sensing task. The method includes:
receiving, by a first network element through an access and mobility management function (AMF), a sensing service request sent by a user equipment (UE), in which the sensing service request includes sensing service information of the sensing task;
sending, by the first network element through the AMF, the sensing service information to one or more sensing nodes;
receiving, by the first network element, one or more pieces of first sensing capability information sent by the one or more sensing nodes respectively, wherein a piece of first sensing capability information is sent by a respective sensing node to the first network element through the AMF under a trigger by the sensing service information, the piece of first sensing capability information comprises a first sensing capability feature of the respective sending node, and the first sensing capability feature has a same feature type as a sensing service feature in the sensing service information;
determining, by the first network element, at least one target sensing node in the one or more sensing nodes according to the one or more pieces of first sensing capability information; and
calling, by the first network element, the at least one target sensing node to execute the sensing task.

Embodiments of a fifth aspect of the present disclosure provide a method for processing a sensing task. The method includes:
receiving, by a first network element through an access and mobility management function (AMF), a sensing service request sent by a user equipment (UE), wherein the sensing service request comprises sensing service information of the sensing task;
receiving, by a second network element through the AMF, one or more pieces of second sensing capability information sent by one or more sensing nodes, wherein a piece of second sensing capability information is sent by a respective sensing node when a trigger condition is met, and the piece of second sensing capability information comprises all sensing capability features of the respective sensing node;
obtaining, by the first network element, the one or more pieces of second sensing capability information from the second network element, and determining one or more pieces of first sensing capability information matching the sensing service information, among the one or more pieces of second sensing capability information, wherein a piece of first sensing capability information comprises a first sensing capability feature of the respective sensing node, and the first sensing capability feature has a same feature type as a sensing service feature in the sensing service information;
determining, by the first network element, at least one target sensing node in the one or more sensing nodes according to the one or more pieces of first sensing capability information; and
calling, by the first network element, the at least one target sensing node to execute the sensing task.

Embodiments of a sixth aspect of the present disclosure provide an apparatus for processing a sensing task. The apparatus is applied in a first network element, and includes:
a receiving module, configured to receive a sensing service request sent by a user equipment (UE) through an access and mobility management function (AMF), wherein the sensing service request comprises sensing service information of the sensing task;
a processing module, configured to obtain one or more pieces of first sensing capability information of one or more sensing nodes respectively, in which the one or more sensing nodes include at least one of a plurality of UEs and a plurality of base stations, a piece of first sensing capability information includes a first sensing capability feature of a respective sensing node, and the first sensing capability feature has a same feature type as a sensing service feature in the sensing service information,
determine at least one target sensing node in the one or more sensing nodes according to the one or more pieces of first sensing capability information, and
call the at least one target sensing node to execute the sensing task.

Embodiments of a seventh aspect of the present disclosure provide an apparatus for processing a sensing task. The apparatus is applied in a sensing node, and includes:
a sending module, configured to send a piece of sensing capability information to a core network, so that a first network element determines at least one target sensing node from one or more sensing nodes according to pieces of sensing capability information, and calls the at least one target sensing node to execute the sensing task.

Embodiments of an eighth aspect of the present disclosure provide an apparatus for processing a sensing task. The apparatus is applied in a core network, and includes:
a receiving module, configured to receive a sensing service request sent by a user equipment (UE), wherein the sensing service request comprises sensing service information of the sensing task;
a processing module, configured to obtain one or more pieces of first sensing capability information of one or more sensing nodes respectively, wherein the one or more sensing nodes comprise at least one of a plurality of UEs and a plurality of base stations, a piece of first sensing capability information comprises a first sensing capability feature of a respective sensing node, and the first sensing capability feature has a same feature type as a sensing service feature of the sensing service information,
determine at least one target sensing node in the one or more sensing nodes according to the one or more pieces of first sensing capability information, and
call the at least one target sensing node to execute the sensing task.

Embodiments of a ninth aspect of the present disclosure provide an apparatus for processing a sensing task. The apparatus includes:
a receive module, configured to receive, by a first network element through an access and mobility management function (AMF), a sensing service request sent by a user equipment (UE), wherein the sensing service request comprises sensing service information of the sensing task;
a sending module, configured to send, by the first network element through the AMF, the sensing service information to one or more sensing nodes;
the receiving module, configured to receive, by the first network element, one or more pieces of first sensing capability information sent by the one or more sensing nodes respectively, wherein a piece of first sensing capability information is sent by a respective sensing node to the first network element through the AMF under a trigger by the sensing service information, the piece of first sensing capability information comprises a first sensing capability feature of the respective sending node, and the first sensing capability feature has a same feature type as a sensing service feature in the sensing service information;
a processing module, configured to determine, by the first network element, at least one target sensing node in one or more sensing nodes according to the pieces of first sensing capability information, and
call, by the first network element, the at least one target sensing node to execute the sensing task.

Embodiments of a tenth aspect of the present disclosure provide an apparatus for processing a sensing task. The apparatus includes:
a first network element receiving, through an access and mobility management function (AMF), a sensing service request sent by a user equipment (UE), wherein the sensing service request comprises sensing service information of the sensing task;
a second network element receiving, through the AMF, one or more pieces of second sensing capability information sent by one or more sensing nodes, wherein a piece of second sensing capability information is sent by a respective sensing node when a trigger condition is met, and the piece of second sensing capability information comprises all sensing capability features of the respective sensing node;
the first network element obtaining the one or more pieces of second sensing capability information from the second network element, and determining one or more pieces of first sensing capability information matching the sensing service information, among the one or more pieces of second sensing capability information, wherein a piece of first sensing capability information comprises a first sensing capability feature of the respective sensing node, and the first sensing capability feature has a same feature type as a sensing service feature in the sensing service information;
the first network element determining at least one target sensing node in the one or more sensing nodes according to the one or more pieces of first sensing capability information; and
the first network element calling the at least one target sensing node to execute the sensing task.

Embodiments of an eleventh aspect of the present disclosure provide communication device. The communication device includes: a transceiver; a memory; a processor, which is connected to the transceiver and the memory respectively, and is configured to control the transceiver to receive or send wireless signals and implement the method of the first aspect of the embodiments of the present disclosure by executing computer executable instructions on the memory.

Embodiments of a twelfth aspect of the present disclosure provide a core network device. The core network device includes: a transceiver; a memory; a processor, which is connected to the transceiver and the memory respectively, and is configured to control the transceiver to receive or send wireless signals and implement the method of the third aspect of the embodiments of the present disclosure by executing computer executable instructions on the memory.

Embodiments of a thirteenth aspect of the present disclosure provide a communication system. The communication system includes: a transceiver; a memory; a processor, which is connected to the transceiver and the memory respectively, and is configured to control the transceiver to receive or send wireless signals and implement the method of the fourth aspect or the fifth aspect of the embodiments of the present disclosure by executing computer executable instructions on the memory.

The embodiments of the present disclosure provide a method and an apparatus for processing a sensing task, in which the first network element may obtain the one or more pieces of first sensing capability information of the one or more sensing nodes respectively after receiving the sensing service request sent by the UE through the AMF, determine at least one target sensing node in the one or more sensing nodes according to the one or more pieces of first perception capability information, and call the at least one target sensing node to execute the sensing task included in the sensing service request. In the technical solution of the present disclosure, the first network element may obtain the one or more pieces of first sensing capability information of the one or more sensing nodes respectively during the sensing task processing, and then accurately and efficiently select the corresponding sensing node providing the sensing service for a specific sensing task based on the one or more pieces of first sensing capability information, which can meet new businesses that may appear in the 6G era and high-quality requirements for data and computing power.

### BRIEF DESCRIPTION OF THE DRAWINGS

The above and/or additional aspects and advantages of the present disclosure will become apparent and easily understood from the following description of the embodiments in conjunction with the accompanying drawings, in which:
FIG. 1 is a flowchart of a method for processing a sensing task according to an embodiment of the present disclosure;
FIG. 2 is a flowchart of a method for processing a sensing task according to an embodiment of the present disclosure;
FIG. 3 is a flowchart of a method for processing a sensing task according to an embodiment of the present disclosure;
FIG. 4 is a flowchart of a method for processing a sensing task according to an embodiment of the present disclosure;
FIG. 5 is a schematic diagram of a 6G distributed computing and storage separation network according to an embodiment of the present disclosure;
FIG. 6 is a flowchart of a method for processing a sensing task according to an embodiment of the present disclosure;
FIG. 7 is a flowchart of a method for processing a sensing task according to an embodiment of the present disclosure;
FIG. 8 is a timing diagram of a method for processing a sensing task according to an embodiment of the present disclosure;
FIG. 9 is a timing diagram of a method for processing a sensing task according to an embodiment of the present disclosure;
FIG. 10 is a block diagram of an apparatus for processing a sensing task according to an embodiment of the present disclosure;
FIG. 11 is a block diagram of an apparatus for processing a sensing task according to an embodiment of the present disclosure;
FIG. 12 is a block diagram of an apparatus for processing a sensing task according to an embodiment of the present disclosure;
FIG. 13 is a block diagram of an apparatus for processing a sensing task according to an embodiment of the present disclosure;
FIG. 14 is a block diagram of an apparatus for processing a sensing task according to an embodiment of the present disclosure;
FIG. 15 is a block diagram of a communication device according to an embodiment of the present disclosure;
FIG. 16 is a block diagram of a chip provided by an embodiment of the present disclosure;
FIG. 17 is a timing diagram of a process of reporting sensing capability information provided by an embodiment of the present disclosure; and
FIG. 18 is a timing diagram of a process of reporting sensing capability information provided in an embodiment of the present disclosure.

### DETAILED DESCRIPTION

Embodiments of the present disclosure are described in detail below, and examples of the embodiments are shown in the accompanying drawings, throughout which the same or similar reference numerals represent the same or similar elements or elements having the same or similar functions. The embodiments described below with reference to the accompanying drawings are exemplary and are intended to be used to explain the present disclosure, and should not be construed as limitations on the present disclosure.

Embodiments of the present application are described in detail below, and examples of the embodiments are shown in the accompanying drawings, throughout which the same or similar reference numerals represent the same or similar elements or elements having the same or similar functions. The embodiments described below with reference to the accompanying drawings are exemplary and are intended to be used to explain the present disclosure, and should not be construed as limitations on the present disclosure. It should be noted that, in the absence of conflict, the embodiments of the present disclosure and the features in the embodiments may be combined with each other.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first information may also be referred to as the second information, and likewise the second information may be referred to as the first information. Depending on the context, the words "if" and "in a case" used here may be interpreted as "when" or "in response to determining".

Currently, there is no suitable reporting method for sensing capabilities in the 6G network architecture, which results in that the core network cannot accurately and efficiently selecting sensing nodes to provide sensing services for specific tasks.

To this end, the present disclosure proposes a method and an apparatus for processing a sensing task, in which the core network may obtain sensing capability information reported by each sensing node, and then select a sensing node corresponding to a sensing task based on the sensing capability information, which can give full play to the computing power of the sensing node, meet the needs of a specific sensing task, and provide users with in-depth sensing information services.

A method and an apparatus for processing a task provided by the present disclosure are described in detail below with reference to the accompanying drawings.

In the present disclosure, a first network element, a second network element and an access and mobility management function (AMF) are all network elements of a core network, that is, specific functional modules in the core network.

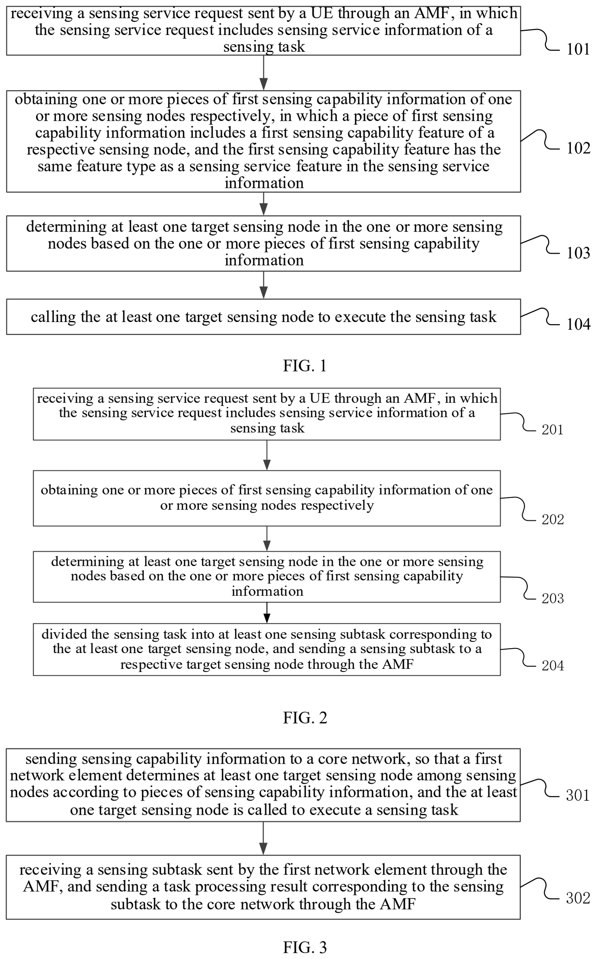

FIG. 1 shows a flowchart of a method for processing a sensing task according to an embodiment of the present disclosure. As shown in FIG. 1, the method is applied to a first network element, which may be a scheduler network element in a 6G core network. The embodiment may include the following steps.

At step 101, a sensing service request sent by a UE through an AMF is received, in which the sensing service request includes sensing service information of a sensing task.

In a specific application scenario, the first network element may receive the sensing service request transmitted by the AMF, which is sent by the UE to the AMF through a radio access network (RAN). It should be noted that the UE cannot communicate directly with the core network, but needs to communicate with the AMF in the core network through the RAN. The sensing service request may carry the sensing service information of the sensing task, which may be an image processing task, a speech recognition task, a model training task, a data cleaning task, etc., which are not specifically limited herein; the sensing service information may include a subscriber permanent identifier (SUPI), a data network name (DNN), user location information, an access type, an area of interest (AoI), and a sensing service requirement, such as a service type, a sensing data type, a sensing distance, a sensing accuracy, a sensing resolution, and a sensing delay, which are not specifically limited herein.

At step 102, one or more pieces of first sensing capability information of one or more sensing nodes are obtained respectively, in which a piece of first sensing capability information includes a first sensing capability feature of a respective sensing node, and the first sensing capability feature has the same feature type as a sensing service feature in the sensing service information.

A sensing node may include at least one of a plurality of UEs or a plurality of base stations, or may also include other service nodes such as an application function (AF), which is not specifically limited herein. It should be noted that in the following embodiment steps of the present disclosure, the sensing nodes include a base station, a UE, and an application function AF, for example, to illustrate the technical solution in the present disclosure, but it does not constitute a specific limitation. The sensing service feature is a feature that the sensing node needs to have when performing the sensing task, such as the sensing distance needs to reach a preset distance value, or the sensing distance needs to be within a preset range, the sensing accuracy needs to reach a preset accuracy value, the sensing resolution needs to reach a preset resolution value, the sensing delay needs to be less than a preset delay value, or the like. The first sensing capability feature has the same feature type as the sensing service feature, which is used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

At step 103, at least one target sensing node is determined in the one or more sensing nodes based on the one or more pieces of first sensing capability information.

For the embodiment of the present disclosure, after receiving the first sensing capability information sent by each sensing node, the first network element may determine whether the sensing node is selected as the target sensing node for performing sensing measurement according to the first sensing capability information, and further determine at least one target sensing node in the one or more sensing nodes, so as to call the at least one target sensing node to perform the sensing task. As a possible implementation, the first network element may calculate a feature similarity between the first sensing capability feature in the first sensing capability information and the sensing service feature in the sensing service information, and determine the sensing node whose corresponding feature similarity is greater than a preset threshold as the target sensing node for performing the sensing task. The preset threshold is a value greater than 0 and less than 1. The closer the value of the preset threshold is to 1, the higher a matching degree between the selected target sensing node and a sensing capability requirement corresponding to the sensing task. A specific value of the preset threshold may be set according to the actual application scenario, and no specific limitation is made here.

At step 104, the at least one target sensing node is called to execute the sensing task.

For the embodiment of the present disclosure, as a possible implementation, when one target sensing node is determined, the first network element may send information such as a magnitude of a sensing measurement configuration parameter corresponding to the sensing task to the AMF, and the AMF sends the information to the target sensing node. The target sensing node may execute the sensing task based on the information such as the magnitude of the sensing measurement configuration parameter. The magnitude of the sensing measurement configuration parameter may be a sensing service parameter under a specific sensing service feature, such as a sensing distance value, a sensing accuracy value, a sensing resolution, a sensing delay parameter, and a specific sensing action to be executed.

For the embodiment of the present disclosure, as a possible implementation, when multiple target sensing nodes are determined, the first network element may divide, according to the sensing service information and the pieces of first sensing capability information corresponding respectively to the multiple target sensing nodes, the sensing task into multiple sensing subtasks executed by the multiple target sensing nodes in a distributed manner. The first network element may send information such as a magnitude of a sensing measurement configuration parameter corresponding to the sensing subtask to the AMF, and the AMF sends the information to the corresponding target sensing node. The target sensing node may execute the sensing subtask based on the information such as the magnitude of the sensing measurement configuration parameter. Task execution results of the multiple sensing subtasks constitute a task execution result of the sensing task. The sensing subtask is a partial sensing task in the sensing task, and multiple sensing subtasks constitute a complete sensing task. The information such as the magnitudes of the sensing measurement configuration parameters corresponding to different sensing subtasks may be the same or different, and no specific limitation is made here.

The multiple sensing subtasks may include at least two of the following: a first sensing subtask executed by a base station, the first sensing subtask being a sensing subtask adapted to the first sensing capability information such as a sensing service area and a sensing service type of the base station; a second sensing subtask executed by at least one target UE among multiple UEs, the second sensing subtask being a sensing subtask adapted to the first sensing capability information such as a sensing service area and a sensing service type of the UE; or a third sensing subtask executed by an AF, the third sensing subtask being a sensing subtask adapted to the first sensing capability information such as a sensing service area and a sensing service type of the AF. The AF is a sensing data provider, including a device such as an application (APP) and a third-party camera. By dividing the sensing task into multiple sensing subtasks and executing the multiple sensing subtasks simultaneously and in a distributed manner, the sensing functions of sensing nodes such as the UE, the base station and the third-party AF for the environment and surrounding objects are utilized to obtain sensing information such as a distance, a direction and a speed. This collaborative method can improve an execution efficiency of the sensing task, allowing the sensing nodes to fully utilize their computing powers and participate extensively in calculation and processing, and thus effectively sharing a task pressure of the sensing service. This can also meet the needs of a specific sensing task to a certain extent and reduce privacy and security risks.

In summary, according to the method for processing a sensing task provided by the embodiment of the present disclosure, the first network element may obtain the one or more pieces of first sensing capability information of the one or more sensing nodes respectively after receiving the sensing service request sent by the UE through the AMF, determine at least one target sensing node in the one or more sensing nodes according to the one or more pieces of first perception capability information, and call the at least one target sensing node to execute the sensing task included in the sensing service request. In the technical solution of the present disclosure, the first network element may obtain the one or more pieces of first sensing capability information of the one or more sensing nodes respectively during the sensing task processing, and then accurately and efficiently select the corresponding sensing node providing the sensing service for a specific sensing task based on the one or more pieces of first sensing capability information, which can meet new businesses that may appear in the 6G era and high-quality requirements for data and computing power.

FIG. 2 shows a flowchart of a method for processing a sensing task according to an embodiment of the present disclosure. As shown in FIG. 2, the method is applied to a first network element. The embodiment may include the following steps.

At step 201, a sensing service request sent by a UE through an AMF is received, in which the sensing service request includes sensing service information of a sensing task.

For the specific implementation of the embodiment of the present disclosure, reference may be made to the relevant description in the embodiment step 101, which will not be repeated here.

At step 202, one or more pieces of first sensing capability information of one or more sensing nodes are received respectively.

For the embodiment of the present disclosure, when the first network element obtains the first sensing capability information, there may be following implementations.

As a possible implementation, the sensing node may determine partial sensing capability information (i.e., the first sensing capability information) having the same feature type as a sensing service feature based on the sensing service information, and then report the corresponding first sensing capability information to the AMF, and the AMF sends the first sensing capability information to the first network element. Correspondingly, the first network element may receive the first sensing capability information sent by the sensing node. Specifically, the first network element may send the sensing service information to the sensing node through the AMF, and receive the first sensing capability information matching the sensing service information and sent by the sensing node through the AMF under the trigger by the sensing service information.

As a possible implementation, a corresponding storage network element, i.e., a second network element (Storage network element), may be set in the core network to store second sensing capability information of each sensing node. The second sensing capability information includes all sensing capability features of the sensing node. Under a certain trigger condition, the sensing node may actively send the whole sensing capability information (i.e., second sensing capability information) to the second network element in the core network. After receiving the second sensing capability information actively sent by the sensing node through the AMF, the second network element may update the second sensing capability information corresponding to the sensing node stored in the core network. The first network element may obtain the second sensing capability information from the second network element.

The trigger condition includes at least one of the following: completion of initialization of a sensing node; reaching a sending cycle of the second sensing capability information; or a change in a sensing capability of a sensing node. In a specific application scenario, as a possible implementation, the sensing node may send the second sensing capability information to the second network element through the AMF when completing the initialization. As a possible implementation, the sensing node may periodically send the second sensing capability information to the second network element through the AMF. As a possible implementation, when the sensing capability changes, the sensing node may send the updated second sensing capability information to the second network element through the AMF. The initialization may correspond to an initial state of accessing the core network such as the sensing node starting up, a sensing area of the sensing node changing, and the sensing node initially registering with the core network. When the sensing node performs reporting periodically, a reporting cycle may be set to 12 hours or 24 hours, which can be set specifically according to the actual application scenario. The sensing capability of the sensing node changing may refer to that the sensing node updates a shared configuration of the sensing capability (such as enabling a shared permission of the sensing capability, etc.), the sensing node fails, the hardware changes, etc., or may also include notifying other situations that cause the sensing capability to change, which are not specifically limited here.

Given that the second sensing capability information contains all sensing capability features possessed by the sensing node, in order to determine whether the sensing node is suitable for performing the sensing task, the first network element may extract first sensing capability information corresponding to the sensing capability feature having the same feature type as the sensing service feature from the second sensing capability information. Specifically, when the first network element determines the first sensing capability information that matches the sensing service information in the second sensing capability information actively sent by the sensing node, the implementation may include: the first network element determining a second sensing capability feature having the same feature type as the sensing service feature in the second sensing capability information actively sent by the sensing node as the first sensing capability information. Accordingly, after receiving the second sensing capability information actively sent by the sensing node through the AMF, the first network element may also update the second sensing capability information corresponding to the sensing node stored in the core network.

The sensing service feature is a feature that the sensing node needs to have when performing the sensing task, such as a sensing distance needs to reach a preset distance value, or a sensing distance needs to be within a preset range, a sensing accuracy needs to reach a preset accuracy value, a sensing resolution needs to reach a preset resolution value, a sensing delay needs to be less than a preset delay value, etc. The second sensing capability feature has the same feature type as the sensing service feature, and is used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

As a possible implementation, the first network element may receive the first sensing capability information matching the sensing service information and sent by the sensing node through the AMF under the trigger by the sensing service information, obtain, from the second network element, the second sensing capability information actively sent by the sensing node, and then comprehensively determine the first sensing capability information of the sensing node based on the received first sensing capability information and the second sensing capability information. When the first network element comprehensively determines the first sensing capability information of the sensing node based on the received first sensing capability information and the second sensing capability information, as a possible implementation, the information reception time of the first sensing capability information and the information reception time of the second sensing capability information may be compared, and the first sensing capability information or the second sensing capability information whose information reception time is closer to the current time is used as the most accurate sensing capability information of the sensing node at the current time, and based on the sensing capability information, it is judged whether the sensing node is suitable for performing the sensing task.

At step 203, at least one target sensing node is determined in the one or more sensing nodes based on the one or more pieces of first sensing capability information.

For the specific implementation of the embodiment of the present disclosure, reference may be made to the relevant description in the embodiment step 103, which will not be repeated here.

At step 204, the sensing task is divided into at least one sensing subtask corresponding to the at least one target sensing node, and a sensing subtask is sent to a respective target sensing node through the AMF.

For the embodiment of the present disclosure, the first network element may divide the sensing task into multiple sensing subtasks corresponding to multiple target sensing nodes according to the sensing service information and pieces of first sensing capability information corresponding respectively to the multiple target sensing nodes, and call the multiple target sensing nodes to execute the multiple sensing subtasks in a distributed manner. The sensing node may include at least one of multiple UEs or multiple base stations, or may also include other service nodes such as application functions (AFs), which are not specifically limited herein. It should be noted that in the following embodiment steps of the present disclosure, the technical solution in the present disclosure is described by taking the one or more sensing nodes including a base station, a UE, and an AF as an example, which does not constitute a specific limitation.

Accordingly, when the first network element divides the sensing task into multiple sensing subtasks for execution in a distributed manner, there may be the following implementations.

As a possible implementation, if the first network element determines that the task attribute is suitable for execution by the base station and the UE based on the sensing service information and the first sensing capability information, the first network element may divide the sensing task into a first sensing subtask and a second sensing subtask for execution in a distributed manner, send the first sensing subtask to the base station through the AMF, and send the second sensing subtask to the UE through the AMF, so that the base station executes the first sensing subtask and the UE executes the second sensing subtask. Accordingly, the first network element may obtain task processing results corresponding to the first sensing subtask and the second sensing subtask as a final processing result of the sensing task.

As a possible implementation, if the first network element determines that the task attribute is suitable for execution by the base station and the AF based on the sensing service information and the first sensing capability information, the first network element may divide the sensing task into a first sensing subtask and a third sensing subtask for execution in a distributed manner, send the first sensing subtask to the base station through the AMF, and send the third sensing subtask to the AF through the AMF, so that the base station executes the first sensing subtask and the AF executes the third sensing subtask. Accordingly, the first network element may obtain task processing results corresponding to the first sensing subtask and the third sensing subtask as a final processing result of the sensing task.

As a possible implementation, if the first network element determines that the task attribute is suitable for execution by the base station, the UE, and the AF based on the sensing service information and the first sensing capability information, the first network element may divide the sensing task into a first sensing subtask, a second sensing subtask, and a third sensing subtask for execution in a distributed manner, send the first sensing subtask to the base station through the AMF, send the second sensing subtask to the UE through the AMF, and send the third sensing subtask to the AF through the AMF, so that the base station executes the first sensing subtask, the UE executes the second sensing subtask, and the AF executes the third sensing subtask. Accordingly, the first network element may obtain task processing results corresponding to the first sensing subtask, the second sensing subtask, and the third sensing subtask as a final processing result of the sensing task.

In summary, according to the method for processing a sensing task provided by the embodiment of the present disclosure, the first network element may obtain the one or more pieces of first sensing capability information of the one or more sensing nodes during the sensing task processing, and then accurately and efficiently select the corresponding sensing node providing sensing services for a specific sensing task based on the one or more pieces of first sensing capability information, which can meet the new businesses that may appear in the 6G era and high-quality requirements for data and computing power.

FIG. 3 shows a flowchart of a method for processing a sensing task according to an embodiment of the present disclosure. As shown in FIG. 3, the method is applied to a sensing node, which includes but is not limited to a base station, a UE and an AF. The embodiment may include the following steps.

At step 301, sensing capability information is sent to a core network, so that a first network element determines at least one target sensing node among sensing nodes according to pieces of sensing capability information, and the at least one target sensing node is called to execute a sensing task.

For the embodiment of the present disclosure, the sensing node sends the sensing capability information to the core network through an AMF. When the sensing capability information is sent to the core network, there may be following implementations.

As a possible implementation, the sensing node may receive sensing service information sent by the first network element in the core network through the AMF. The sensing node sends first sensing capability information to the first network element through the AMF under a trigger by the sensing service information. The first sensing capability information includes a first sensing capability feature of the sensing node, and the first sensing capability feature has the same feature type as a sensing service feature in the sensing service information.

As a possible implementation, a corresponding storage network element, i.e., a second network element (Storage network element), may be set in the core network to store second sensing capability information of each sensing node. Under a certain trigger condition, the sensing node may actively send second sensing capability information to a second network element in the core network through the AMF. The second sensing capability information is sent by the sensing node when a trigger condition is met and includes all sensing capability features of the sensing node. The trigger condition includes at least one of the following: completion of initialization of a sensing node; reaching a sending cycle of the second sensing capability information; or a change in a sensing capability of a sensing node. In a specific application scenario, as a possible implementation, the sensing node may send the second sensing capability information to the second network element through the AMF when completing the initialization. As a possible implementation, the sensing node may periodically send the second sensing capability information to the second network element through the AMF. As a possible implementation, when the sensing capability changes, the sensing node may send the updated second sensing capability information to the second network element through the AMF. The initialization may correspond to an initial state of accessing the core network such as the sensing node starting up, a sensing area of the sensing node changing, and the sensing node initially registering with the core network. When the sensing node performs reporting periodically, a reporting cycle may be set to 12 hours or 24 hours, which can be set specifically according to the actual application scenario. The sensing capability of the sensing node changing may refer to that the sensing node updates a shared configuration of the sensing capability (such as enabling a shared permission of the sensing capability, etc.), the sensing node fails, the hardware changes, etc., or may also include notifying other situations that cause the sensing capability to change, which are not specifically limited here.

In a specific application scenario, the first network element may obtain the second sensing capability information actively sent by the sensing node through the AMF from the second network element. Given that the second sensing capability information contains all sensing capability features possessed by the sensing node, in order to determine whether the sensing node is suitable for performing the sensing task, the first network element may extract first sensing capability information corresponding to the sensing capability feature having the same feature type as the sensing service feature from the second sensing capability information. The first network element may determine a second sensing capability feature having the same feature type as the sensing service feature in the second sensing capability information actively sent by the sensing node as the first sensing capability information.

The sensing service feature is a feature that the sensing node needs to have when performing the sensing task, such as a sensing distance needs to reach a preset distance value, or a sensing distance needs to be within a preset range, a sensing accuracy needs to reach a preset accuracy value, a sensing resolution needs to reach a preset resolution value, a sensing delay needs to be less than a preset delay value, etc. The first sensing capability feature and the second sensing capability feature have the same feature type as the sensing service feature, which are used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

As a possible implementation, the sensing node may send the first sensing capability information matching the sensing service information to the first network element through the AMF under the trigger by the sensing service information, and send the second sensing capability information actively to the second network element when the trigger condition is met, so that the first network element comprehensively determines the first sensing capability information of the sensing node based on the received first sensing capability information and the second sensing capability information.

At step 302, a sensing subtask sent by the first network element through the AMF is received, and a task processing result corresponding to the sensing subtask is sent to the core network through the AMF.

In a specific application scenario, the first network element may divide the sensing task into multiple sensing subtasks corresponding to multiple target sensing nodes according to the sensing service information and pieces of first sensing capability information corresponding respectively to the multiple target sensing nodes, call the multiple target sensing nodes to execute the multiple sensing subtasks in a distributed manner, and send information such as magnitudes of sensing measurement configuration parameters corresponding to the multiple sensing subtasks to the multiple target sensing nodes, respectively. For the embodiment of the present disclosure, when a sensing node is determined as a target sensing node by the first network element, the information such as the magnitude of the sensing measurement configuration parameter of the sensing subtask sent by the first network element through the AMF may be received. The sensing node may execute the corresponding sensing subtask according to the information such as the magnitude of the sensing measurement configuration parameter, and send a task processing result to the core network through the AMF after obtaining the task processing result corresponding to the sensing subtask.

In summary, according to the method for processing a sensing task provided by the embodiment of the present disclosure, the sensing node may send the corresponding sensing capability information to the first network element, so that the first network element may accurately and efficiently select the corresponding sensing node providing sensing services for a specific sensing task based on the sensing capability information, which can meet new businesses that may appear in the 6G era and high-quality requirements for data and computing power.

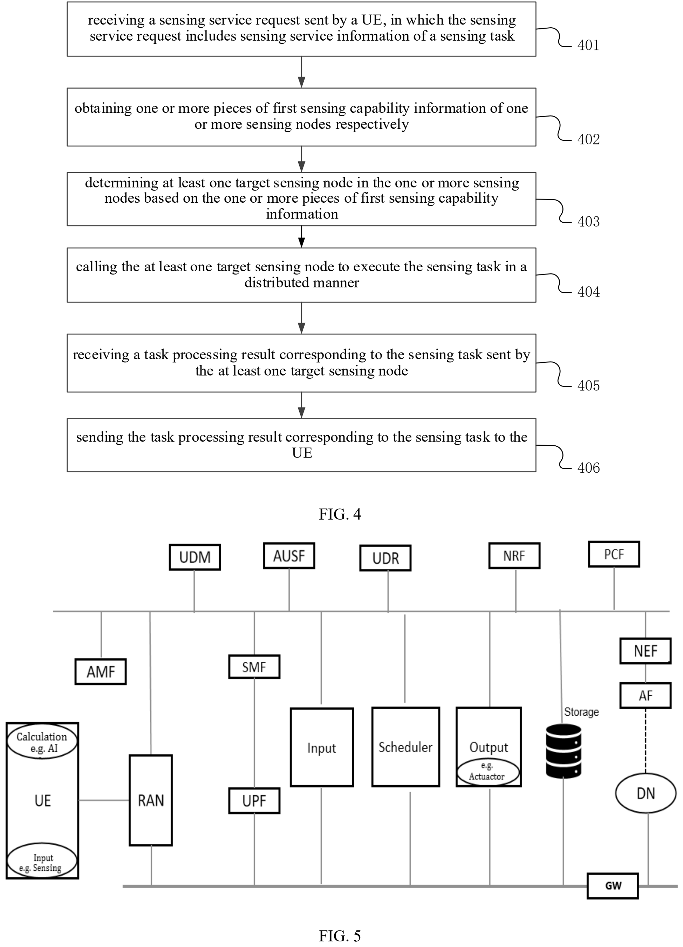

FIG. 4 shows a flowchart of a method for processing a sensing task according to an embodiment of the present disclosure. As shown in FIG. 4, the method is applied to a core network side. As shown in FIG. 5, a 6G distributed computing and storage separation network corresponding to the core network may include: multiple UEs, a radio access network (RAN), an AMF, a first (Scheduler) network element, and an AF. In addition, the network may also include: an input network element, an output network element, a storage network element, a session management function (SMF), a unified data management (UDM), a user plane function (UPF), an authentication server function (AUSF), a user data repository (UDR), a network repository function (NRF), a policy control function (PCF), a network exposure function (NEF), a data network (DN), a gateway (GW), etc., which are not specifically limited here. The embodiment may include the following steps.

At step 401, a sensing service request sent by a UE is received, in which the sensing service request includes sensing service information of a sensing task.

In a specific application scenario, the UE may send the sensing service request to the AMF in the core network through a radio access network (RAN) and transmit the sensing service request to the first network element in the core network through the AMF. Correspondingly, for the embodiment of the present disclosure, the first network element may receive the sensing service request transmitted by the AMF. The sensing service request may carry the sensing service information of the sensing task, which may be an image processing task, a speech recognition task, a model training task, a data cleaning task, etc., which are not specifically limited herein; the sensing service information may include a subscriber permanent identifier (SUPI), a data network name (DNN), user location information, an access type, an area of interest (AoI), and a sensing service requirement, such as a service type, a sensing data type, or the like, which are not specifically limited herein.

At step 402, one or more pieces of first sensing capability information of one or more sensing nodes are obtained respectively.

A sensing node may include at least one of a plurality of UEs or a plurality of base stations. The first sensing capability information includes a first sensing capability feature of the sensing node, and the first sensing capability feature has the same feature type as a sensing service feature in the sensing service information.

In a specific application scenario, as a possible implementation, the one or more sensing nodes may report their respective pieces of first sensing capability information to the AMF in the core network, and the AMF sends the one or more pieces of first sensing capability information to the first network element in the core network. Correspondingly, the first network element may receive the one or more pieces of first sensing capability information sent by the one or more sensing nodes. Specifically, the core network may use the first network element to send the sensing service information to the AMF, and the AMF sends the sensing service information to the one or more sensing nodes. The AMF may receive the one or more pieces of first sensing capability information matching the sensing service information and sent by the one or more sensing nodes under a task by the sensing service information, and send the pieces of first sensing capability information to the first network element.

As a possible implementation, a corresponding storage network element, i.e., a second network element (Storage network element), may be set in the core network to store second sensing capability information of each sensing node. The second sensing capability information is sent by the sensing node when a trigger condition is met and includes all sensing capability features of the sensing node. The trigger condition includes at least one of the following: completion of initialization of a sensing node; reaching a sending cycle of the second sensing capability information; or a change in a sensing capability of a sensing node. In a specific application scenario, as a possible implementation, the sensing node may send the second sensing capability information to the second network element through the AMF when completing the initialization. As a possible implementation, the sensing node may periodically send the second sensing capability information to the second network element through the AMF. As a possible implementation, when the sensing capability changes, the sensing node may send the updated second sensing capability information to the second network element through the AMF. The initialization may correspond to an initial state of accessing the core network such as the sensing node starting up, a sensing area of the sensing node changing, and the sensing node initially registering with the core network. When the sensing node performs reporting periodically, a reporting cycle may be set to 12 hours or 24 hours, which can be set specifically according to the actual application scenario. The sensing capability of the sensing node changing may refer to that the sensing node updates a shared configuration of the sensing capability (such as enabling a shared permission of the sensing capability, etc.), the sensing node fails, the hardware changes, etc., or may also include notifying other situations that cause the sensing capability to change, which are not specifically limited here.

In a specific application scenario, the sensing node may actively send the whole sensing capability information (i.e., second sensing capability information) to the second network element in the core network under a certain trigger condition. After receiving the second sensing capability information actively sent by the sensing node through the AMF, the second network element may update the second sensing capability information corresponding to the sensing node stored in the core network. The first network element may obtain the second sensing capability information from the second network element. Given that the second sensing capability information contains all sensing capability features possessed by the sensing node, in order to determine whether the sensing node is suitable for performing the sensing task, the first network element may extract first sensing capability information corresponding to the sensing capability feature having the same feature type as the sensing service feature from the second sensing capability information. Specifically, when the first network element determines the first sensing capability information that matches the sensing service information in the second sensing capability information actively sent by the sensing node, the implementation may include: the first network element determining a second sensing capability feature having the same feature type as the sensing service feature in the second sensing capability information actively sent by the sensing node as the first sensing capability information. Accordingly, after receiving the second sensing capability information actively sent by the sensing node through the AMF, the first network element may also update the second sensing capability information corresponding to the sensing node stored in the core network.

The sensing service feature is a feature that the sensing node needs to have when performing the sensing task, such as a sensing distance needs to reach a preset distance value, or a sensing distance needs to be within a preset range, a sensing accuracy needs to reach a preset accuracy value, a sensing resolution needs to reach a preset resolution value, a sensing delay needs to be less than a preset delay value, etc. The second sensing capability feature has the same feature type as the sensing service feature, and is used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

As a possible implementation, the first network element in the core network may receive the first sensing capability information matching the sensing service information and sent by the sensing node through the AMF under the trigger by the sensing service information, obtain, from the second network element, the second sensing capability information actively sent by the sensing node, and then comprehensively determine the first sensing capability information of the sensing node based on the received first sensing capability information and the second sensing capability information. When the first network element comprehensively determines the first sensing capability information of the sensing node based on the received first sensing capability information and the second sensing capability information, as a possible implementation, the information reception time of the first sensing capability information and the information reception time of the second sensing capability information may be compared, and the first sensing capability information or the second sensing capability information whose information reception time is closer to the current time is used as the most accurate sensing capability information of the sensing node at the current time, and based on the sensing capability information, it is judged whether the sensing node is suitable for performing the sensing task.

At step 403, at least one target sensing node is determined in the one or more sensing nodes based on the pieces of first sensing capability information.

For the embodiment of the present disclosure, after receiving the first sensing capability information sent by each sensing node, the first network element in the core network may determine whether the sensing node is selected as the target sensing node for performing sensing measurement according to the first sensing capability information, and further determine at least one target sensing node in the one or more sensing nodes, so as to call the at least one target sensing node to perform the sensing task. As a possible implementation, the first network element may calculate a feature similarity between the first sensing capability feature in the first sensing capability information and the sensing service feature in the sensing service information, and determine the sensing node whose corresponding feature similarity is greater than a preset threshold as the target sensing node for performing the sensing task. The preset threshold is a value greater than 0 and less than 1. The closer the value of the preset threshold is to 1, the higher a matching degree between the selected target sensing node and a sensing capability requirement corresponding to the sensing task. A specific value of the preset threshold may be set according to the actual application scenario, and no specific limitation is made here.

At step 404, the at least one target sensing node is called to execute the sensing task in a distributed manner.

For the embodiment of the present disclosure, as a possible implementation, when one target sensing node is determined, the first network element in the core network may send information such as a magnitude of a sensing measurement configuration parameter corresponding to the sensing task to the AMF, and the AMF sends the information to the target sensing node. The target sensing node may execute the sensing task based on the information such as the magnitude of the sensing measurement configuration parameter. The magnitude of the sensing measurement configuration parameter may be a sensing service parameter under a specific sensing service feature, such as a sensing distance value, a sensing accuracy value, a sensing resolution, a sensing delay parameter, and a specific sensing action to be executed.

For the embodiment of the present disclosure, as a possible implementation, when multiple target sensing nodes are determined, the first network element in the core network may divide, according to the sensing service information and the pieces of first sensing capability information corresponding respectively to the multiple target sensing nodes, the sensing task into multiple sensing subtasks executed by the multiple target sensing nodes in a distributed manner. The first network element may send information such as a magnitude of a sensing measurement configuration parameter corresponding to the sensing subtask to the AMF, and the AMF sends the information to the corresponding target sensing node. The target sensing node may execute the sensing subtask based on the information such as the magnitude of the sensing measurement configuration parameter. Task execution results of the multiple sensing subtasks constitute a task execution result of the sensing task. The sensing subtask is a partial sensing task in the sensing task, and multiple sensing subtasks constitute a complete sensing task. The information such as the magnitudes of the sensing measurement configuration parameters corresponding to different sensing subtasks may be the same or different, and no specific limitation is made here.

The multiple sensing subtasks may include at least two of the following: a first sensing subtask executed by a base station, the first sensing subtask being a sensing subtask adapted to the first sensing capability information such as a sensing service area and a sensing service type of the base station; a second sensing subtask executed by at least one target UE among multiple UEs, the second sensing subtask being a sensing subtask adapted to the first sensing capability information such as a sensing service area and a sensing service type of the UE; or a third sensing subtask executed by an AF, the third sensing subtask being a sensing subtask adapted to the first sensing capability information such as a sensing service area and a sensing service type of the AF. The AF is a sensing data provider, including a device such as an application (APP) and a third-party camera. By dividing the sensing task into multiple sensing subtasks and executing the multiple sensing subtasks simultaneously and in a distributed manner, the sensing functions of sensing nodes such as the UE, the base station and the third-party AF for the environment and surrounding objects are utilized to obtain sensing information such as a distance, a direction and a speed. This collaborative method can improve an execution efficiency of the sensing task, allowing the sensing nodes to fully utilize their computing powers and participate extensively in calculation and processing, and thus effectively sharing a task pressure of the sensing service. This can also meet the needs of a specific sensing task to a certain extent and reduce privacy and security risks.

At step 405, a task processing result corresponding to the sensing task sent by the at least one target sensing node is received.

As a possible implementation, when it is determined that only one target sensing node is included in the one or more sensing nodes, the core network may receive the task processing result corresponding to the sensing task sent by the target sensing node; when the one or more sensing nodes include multiple target sensing nodes, the core network may receive subtask processing results for divided sensing subtasks sent by different target sensing nodes, and obtain the task processing result corresponding to the sensing task after integrating the multiple subtask processing results.

At step 406, the task processing result corresponding to the sensing task is sent to the UE.

In a specific application scenario, after receiving the sensing service request sent by the UE, the core network may also establish a sensing business session with the UE based on the sensing service information. Specifically, the user plane function (UPF) in the core network may be used to establish the sensing business session with the UE based on the sensing service information. In a specific application scenario, the UPF may receive RAN side tunnel information of a wireless resource corresponding to the UE and establish a user plane tunnel to the RAN. The UPF may exchange data with the UE based on the user plane tunnel.

For the embodiment of the present disclosure, after the core network side aggregates the task processing result(s) of the sensing subtask(s) corresponding to the at least one target sensing node, the core network side may send the task processing result of the sensing task to the UE through the sensing business session to complete the sensing service procedure. In a specific application scenario, after the UPF obtains the task processing result of the sensing task by aggregating, the UPF may send the task processing result of the sensing task to the UE through the sensing business session to complete the sensing service procedure.

The task processing result is obtained by the first network element determining the at least one target sensing node in the one or more sensing nodes according to the one or more pieces of first sensing capability information and calling the at least one target sensing node to execute the sensing task, after the first network element obtains the one or more pieces of first sensing capability information of the one or more sensing nodes. For the specific implementation, reference may be made to the relevant description in embodiment step 104 or 204, which will not be repeated here. The one or more sensing nodes may include at least one of multiple UEs or multiple base stations, or may also include other service nodes such as an AF, which are not specifically limited here. It should be noted that in the following embodiment steps of the present disclosure, the technical solution in the present disclosure is explained by taking the one or more sensing nodes including a base station, a UE, and an AF as an example, but it does not constitute a specific limitation. The first sensing capability information includes a first sensing capability feature of a respective sensing node. The sensing service feature is a feature that the sensing node needs to have when performing the sensing task, such as the sensing distance needs to reach a preset distance value, or the sensing distance needs to be within a preset range, the sensing accuracy needs to reach a preset accuracy value, the sensing resolution needs to reach a preset resolution value, the sensing delay needs to be less than a preset delay value, or the like. The first sensing capability feature has the same feature type as the sensing service feature, which is used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

In summary, according to the method for processing a sensing task provided by the embodiment of the present disclosure, the core network side may obtain the one or more pieces of first sensing capability information of the one or more sensing nodes during the sensing task processing, and then accurately and efficiently select the corresponding sensing node providing sensing services for a specific sensing task based on the pieces of first sensing capability information, which can meet new businesses that may appear in the 6G era and high-quality requirements for data and computing power.

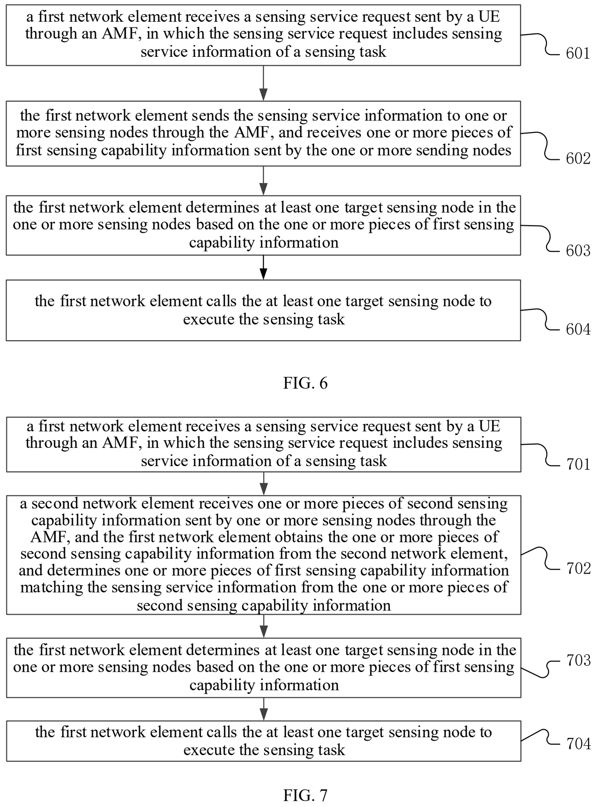

FIG. 6 shows a flowchart of a method for processing a sensing task according to an embodiment of the present disclosure. As shown in FIG. 6, the method is applied to a core network side. The embodiment may include the following steps.

At step 601, a first network element receives a sensing service request sent by a UE through an AMF, in which the sensing service request includes sensing service information of a sensing task.

For the specific implementation of the embodiment of the present disclosure, reference may be made to the relevant description in the embodiment step 101, which will not be repeated here.

At step 602, the first network element sends the sensing service information to one or more sensing nodes through the AMF, and receives one or more pieces of first sensing capability information sent by the one or more sending nodes.

The first sensing capability information is sent by the sensing node to the first network element through the AMF under a trigger by the sensing service information. The first sensing capability information includes a first sensing capability feature of the sensing node, and the first sensing capability feature has the same feature type as a sensing service feature in the sensing service information. The sensing node may include at least one of a plurality of UEs or a plurality of base stations, or may also include other service nodes such as an application function (AF), which is not specifically limited herein. It should be noted that in the following embodiment steps of the present disclosure, the one or more sensing nodes include a base station, a UE, and an application function AF, for example, to illustrate the technical solution in the present disclosure, but it does not constitute a specific limitation. The sensing service feature is a feature that the sensing node needs to have when performing the sensing task, such as the sensing distance needs to reach a preset distance value, or the sensing distance needs to be within a preset range, the sensing accuracy needs to reach a preset accuracy value, the sensing resolution needs to reach a preset resolution value, the sensing delay needs to be less than a preset delay value, or the like. The first sensing capability feature has the same feature type as the sensing service feature, which is used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

For the embodiment of the present disclosure, the core network may use the first network element to send the sensing service information to the AMF, and the AMF sends the sensing service information to one or more sensing nodes. The AMF may receive one or more pieces of first sensing capability information matching the sensing service information and sent by the one or more sensing nodes under the trigger by the sensing service information, and send the one or more pieces of first sensing capability information to the first network element.

At step 603, the first network element determines at least one target sensing node in the one or more sensing nodes based on the one or more pieces of first sensing capability information.

For the specific implementation of the embodiment of the present disclosure, reference may be made to the relevant description in the embodiment step 103, which will not be repeated here.

At step 604, the first network element calls the at least one target sensing node to execute the sensing task.

For the specific implementation of the embodiment of the present disclosure, reference may be made to the relevant description in the embodiment step 104, which will not be repeated here.

In summary, according to the method for processing a sensing task provided by the embodiment of the present disclosure, the core network side may obtain the one or more pieces of first sensing capability information of the one or more sensing nodes during the sensing task processing, and then accurately and efficiently select the corresponding sensing node providing sensing services for a specific sensing task based on the pieces of first sensing capability information, which can meet new businesses that may appear in the 6G era and high-quality requirements for data and computing power.

FIG. 7 shows a flowchart of a method for processing a sensing task according to an embodiment of the present disclosure. As shown in FIG. 7, the method is applied to a core network side. The embodiment may include the following steps.

At step 701, a first network element receives a sensing service request sent by a UE through an AMF, in which the sensing service request includes sensing service information of a sensing task.

For the specific implementation of the embodiment of the present disclosure, reference may be made to the relevant description in the embodiment step 101, which will not be repeated here.

At step 702, a second network element receives one or more pieces of second sensing capability information sent by one or more sensing nodes through the AMF, and the first network element obtains the one or more pieces of second sensing capability information from the second network element, and determines one or more pieces of first sensing capability information matching the sensing service information from the one or more pieces of second sensing capability information.

The second sensing capability information is sent by the sensing node when a trigger condition is met, and the second sensing capability information includes all sensing capability features of the sensing node. The first sensing capability information includes a first sensing capability feature of the sensing node, and the first sensing capability feature has the same feature type as a sensing service feature in the sensing service information.

In a specific application scenario, a corresponding storage network element, i.e., a second network element (Storage network element), may be set in the core network to store second sensing capability information of each sensing node. The second sensing capability information includes all sensing capability features of the sensing node. Under a certain trigger condition, the sensing node may actively send the whole sensing capability information (i.e., second sensing capability information) to the second network element in the core network. After receiving the second sensing capability information actively sent by the sensing node through the AMF, the second network element may update the second sensing capability information corresponding to the sensing node stored in the core network. The first network element may obtain the second sensing capability information from the second network element.

The trigger condition includes at least one of the following: completion of initialization of a sensing node; reaching a sending cycle of the second sensing capability information; or a change in a sensing capability of a sensing node. In a specific application scenario, as a possible implementation, the sensing node may send the second sensing capability information to the second network element through the AMF when completing the initialization. As a possible implementation, the sensing node may periodically send the second sensing capability information to the second network element through the AMF. As a possible implementation, when the sensing capability changes, the sensing node may send the updated second sensing capability information to the second network element through the AMF. The initialization may correspond to an initial state of accessing the core network such as the sensing node starting up, a sensing area of the sensing node changing, and the sensing node initially registering with the core network. When the sensing node performs reporting periodically, a reporting cycle may be set to 12 hours or 24 hours, which can be set specifically according to the actual application scenario. The sensing capability of the sensing node changing may refer to that the sensing node updates a shared configuration of the sensing capability (such as enabling a shared permission of the sensing capability, etc.), the sensing node fails, the hardware changes, etc., or may also include notifying other situations that cause the sensing capability to change, which are not specifically limited here.

Given that the second sensing capability information contains all sensing capability features possessed by the sensing node, in order to determine whether the sensing node is suitable for performing the sensing task, the first network element may extract first sensing capability information corresponding to the sensing capability feature having the same feature type as the sensing service feature from the second sensing capability information. Specifically, when the first network element determines the first sensing capability information that matches the sensing service information in the second sensing capability information actively sent by the sensing node, the implementation may include: the first network element determining a second sensing capability feature having the same feature type as the sensing service feature in the second sensing capability information actively sent by the sensing node as the first sensing capability information. Accordingly, after receiving the second sensing capability information actively sent by the sensing node through the AMF, the first network element may also update the second sensing capability information corresponding to the sensing node stored in the core network.

The sensing service feature is a feature that the sensing node needs to have when performing the sensing task, such as a sensing distance needs to reach a preset distance value, or a sensing distance needs to be within a preset range, a sensing accuracy needs to reach a preset accuracy value, a sensing resolution needs to reach a preset resolution value, a sensing delay needs to be less than a preset delay value, etc. The second sensing capability feature has the same feature type as the sensing service feature, and is used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

At step 703, the first network element determines at least one target sensing node in the one or more sensing nodes based on the pieces of first sensing capability information.

For the specific implementation of the embodiment of the present disclosure, reference may be made to the relevant description in the embodiment step 103, which will not be repeated here.

At step 704, the first network element calls the at least one target sensing node to execute the sensing task.

For the specific implementation of the embodiment of the present disclosure, reference may be made to the relevant description in the embodiment step 104, which will not be repeated here.

In summary, according to the method for processing a sensing task provided by the embodiment of the present disclosure, the core network side may obtain the one or more pieces of first sensing capability information of the one or more sensing nodes during the sensing task processing, and then accurately and efficiently select the corresponding sensing node providing sensing services for a specific sensing task based on the pieces of first sensing capability information, which can meet new businesses that may appear in the 6G era and high-quality requirements for data and computing power.

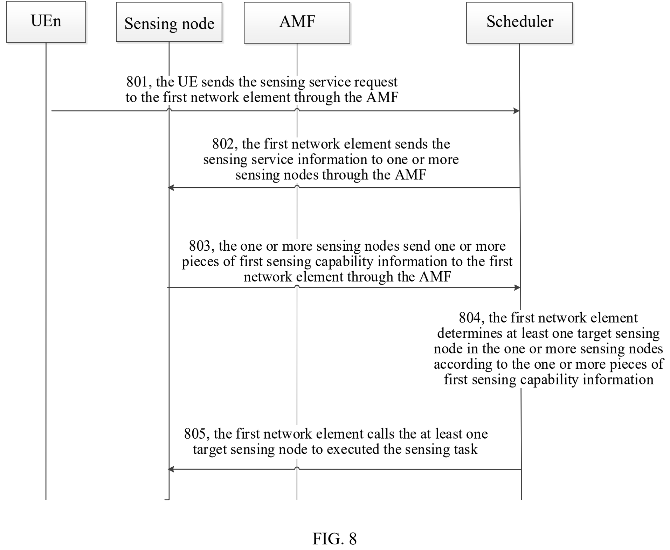

FIG. 8 is a timing diagram of a method for processing a sensing task according to an embodiment of the present disclosure. The method is applied to a 6G distributed computing and storage separation network. The embodiment may include the following steps.

For the embodiment of the present disclosure, the specific implementation may be described as follows. A UE sends a sensing service request to a first network element (Scheduler network element) through an AMF, and the sensing service request includes sensing service information of a sensing task. The first network element sends the sensing service information to one or more sensing nodes through the AMF. The one or more sensing nodes send one or more pieces of first sensing capability information to the first network element through the AMF under a trigger by the sensing service information. The first network element determines at least one target sensing node in the one or more sensing nodes according to the one or more pieces of first sensing capability information. The first network element calls the at least one target sensing node to execute the sensing task.

At step 801, the UE sends the sensing service request to the first network element through the AMF.

For the specific implementation of the embodiment of the present disclosure, reference may be made to the relevant description in the embodiment step 101, which will not be repeated here.

At step 802, the first network element sends the sensing service information to one or more sensing nodes through the AMF.

At step 803, the one or more sensing nodes send one or more pieces of first sensing capability information to the first network element through the AMF.

The first sensing capability information includes a first sensing capability feature of a respective sensing node, and the first sensing capability feature has the same feature type as a sensing service feature in the sensing service information. A sensing node may include at least one of a plurality of UEs or a plurality of base stations, or may also include other service nodes such as an application function (AF), which is not specifically limited herein. It should be noted that in the following embodiment steps of the present disclosure, the one or more sensing nodes include a base station, a UE, and an application function AF, for example, to illustrate the technical solution in the present disclosure, but it does not constitute a specific limitation. The sensing service feature is a feature that the sensing node needs to have when performing the sensing task, such as the sensing distance needs to reach a preset distance value, or the sensing distance needs to be within a preset range, the sensing accuracy needs to reach a preset accuracy value, the sensing resolution needs to reach a preset resolution value, the sensing delay needs to be less than a preset delay value, or the like. The first sensing capability feature has the same feature type as the sensing service feature, which is used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

For embodiment steps 802 and 803, the first network element may send the sensing service information to the AMF, and the AMF may send the sensing service information to one or more sensing nodes. The AMF may receive one or more pieces of first sensing capability information matching the sensing service information and sent by the one or more sensing nodes under the trigger by the sensing service information, and send the one or more pieces of first sensing capability information to the first network element.

At step 804, the first network element determines at least one target sensing node in the one or more sensing nodes according to the one or more pieces of first sensing capability information.

For the specific implementation of the embodiment of the present disclosure, reference may be made to the relevant description in the embodiment step 103, which will not be repeated here.

At step 805, the first network element calls the at least one target sensing node to executed the sensing task.

For the specific implementation of the embodiment of the present disclosure, reference may be made to the relevant description in the embodiment step 104, which will not be repeated here.

In summary, according to the method for processing a sensing task provided by the embodiment of the present disclosure, the core network side may obtain the one or more pieces of first sensing capability information of the one or more sensing nodes during the sensing task processing, and then accurately and efficiently select the corresponding sensing node providing sensing services for a specific sensing task based on the pieces of first sensing capability information, which can meet new businesses that may appear in the 6G era and high-quality requirements for data and computing power.

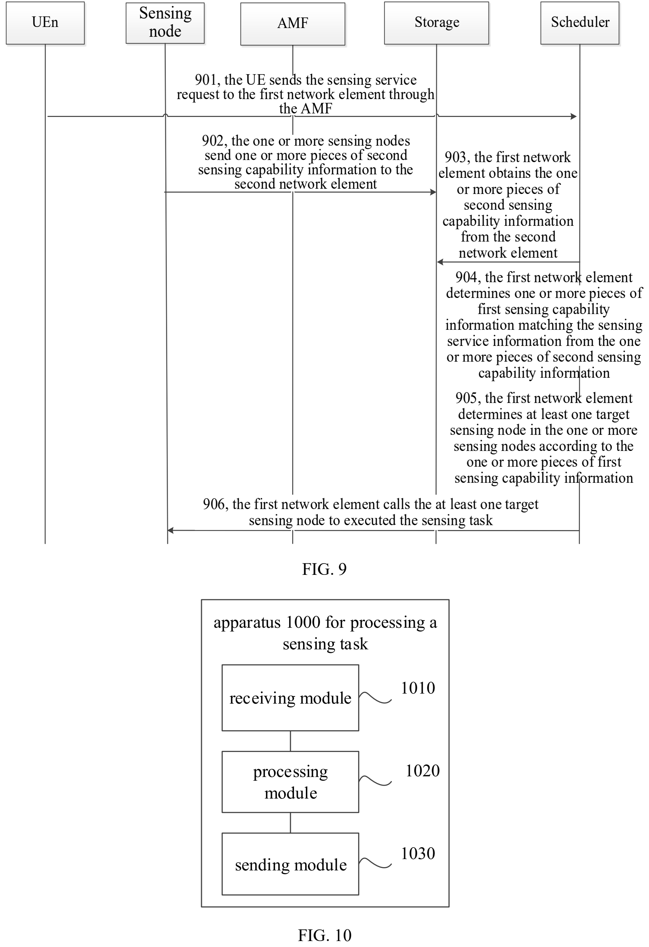

FIG. 9 is a timing diagram of a method for processing a sensing task according to an embodiment of the present disclosure. The method is applied to a 6G distributed computing and storage separation network. The embodiment may include the following steps.

For the embodiment of the present disclosure, the specific implementation may be described as follows. A UE sends a sensing service request to a first network element (Scheduler network element) through an AMF, and the sensing service request includes sensing service information of a sensing task. One or more sensing nodes send one or more pieces of second sensing capability information to a second network element (Storage network element) through the AMF. The first network element obtains the one or more pieces of second sensing capability information from the second network element. The first network element determines one or more pieces of first sensing capability information matching the sensing service information from the one or more pieces of second sensing capability information. The first network element determines at least one target sensing node in the one or more sensing nodes according to the one or more pieces of first sensing capability information. The first network element calls the at least one target sensing node to execute the sensing task.

At step 901, the UE sends the sensing service request to the first network element through the AMF.

For the specific implementation of the embodiment of the present disclosure, reference may be made to the relevant description in the embodiment step 101, which will not be repeated here.

At step 902, the one or more sensing nodes send one or more pieces of second sensing capability information to the second network element.

For the embodiment of the present disclosure, a corresponding storage network element, i.e., a second network element (Storage network element), may be set in the core network to store second sensing capability information of each sensing node. The second sensing capability information includes all sensing capability features of the sensing node. Under a certain trigger condition, the sensing node may actively send the whole sensing capability information (i.e., second sensing capability information) to the second network element in the core network. After receiving the second sensing capability information actively sent by the sensing node through the AMF, the second network element may update the second sensing capability information corresponding to the sensing node stored in the core network.

The trigger condition may include at least one of the following: completion of initialization of a sensing node; reaching a sending cycle of the second sensing capability information; or a change in a sensing capability of a sensing node. In a specific application scenario, as a possible implementation, the sensing node may send the second sensing capability information to the second network element through the AMF when completing the initialization. As a possible implementation, the sensing node may periodically send the second sensing capability information to the second network element through the AMF. As a possible implementation, when the sensing capability changes, the sensing node may send the updated second sensing capability information to the second network element through the AMF. The initialization may correspond to an initial state of accessing the core network such as the sensing node starting up, a sensing area of the sensing node changing, and the sensing node initially registering with the core network. When the sensing node performs reporting periodically, a reporting cycle may be set to 12 hours or 24 hours, which can be set specifically according to the actual application scenario. The sensing capability of the sensing node changing may refer to that the sensing node updates a shared configuration of the sensing capability (such as enabling a shared permission of the sensing capability, etc.), the sensing node fails, the hardware changes, etc., or may also include notifying other situations that cause the sensing capability to change, which are not specifically limited here.

At step 903, the first network element obtains the one or more pieces of second sensing capability information from the second network element.

At step 904, the first network element determines one or more pieces of first sensing capability information matching the sensing service information from the one or more pieces of second sensing capability information. The second sensing capability information includes all sensing capability features of a respective sensing node.

For the embodiment of the present disclosure, given that the second sensing capability information contains all sensing capability features possessed by the sensing node, in order to determine whether the sensing node is suitable for performing the sensing task, first sensing capability information corresponding to the sensing capability feature having the same feature type as the sensing service feature may be extracted from the second sensing capability information. Specifically, when the first network element determines the first sensing capability information that matches the sensing service information in the second sensing capability information, the implementation may include: the first network element determining a second sensing capability feature having the same feature type as the sensing service feature in the second sensing capability information as the first sensing capability information.

The sensing service feature is a feature that the sensing node needs to have when performing the sensing task, such as a sensing distance needs to reach a preset distance value, or a sensing distance needs to be within a preset range, a sensing accuracy needs to reach a preset accuracy value, a sensing resolution needs to reach a preset resolution value, a sensing delay needs to be less than a preset delay value, etc. The second sensing capability feature has the same feature type as the sensing service feature, and is used to reflect a level of the sensing capability of the sensing node under the feature type corresponding to the sensing service feature, such as a sensing range under the sensing distance feature, a size of the sensing accuracy under the sensing accuracy feature, a size of the sensing resolution under the sensing resolution feature, and a size of the delay under the sensing delay feature, etc. The specific feature type may be set according to the actual application scenario, which is not limited here.

At step 905, the first network element determines at least one target sensing node in the one or more sensing nodes according to the one or more pieces of first sensing capability information.

For the specific implementation of the embodiment of the present disclosure, reference may be made to the relevant description in the embodiment step 103, which will not be repeated here.

At step 906, the first network element calls the at least one target sensing node to executed the sensing task.

For the specific implementation of the embodiment of the present disclosure, reference may be made to the relevant description in the embodiment step 104, which will not be repeated here.

In summary, according to the method for processing a sensing task provided by the embodiment of the present disclosure, the core network side may obtain the pieces of first sensing capability information of the sensing nodes during the sensing task processing, and then accurately and efficiently select the corresponding sensing node providing sensing services for a specific sensing task based on the pieces of first sensing capability information, which can meet new businesses that may appear in the 6G era and high-quality requirements for data and computing power.

In the embodiments provided by the present disclosure, the methods provided by the embodiments of the present disclosure are introduced from the perspectives of a first network element, a UE, a sensing node, and a core network. In order to implement the functions in the methods provided by the embodiments of the present disclosure, each of the first network element, the UE, the sensing node and the core network may include a hardware structure and a software module, and the functions are implemented in the form of the hardware structure, the software module, or the hardware structure plus the software module. A function of the functions may be executed in the form of the hardware structure, the software module, or the hardware structure plus the software module.

Corresponding to the method for processing a sensing task provided in the above-mentioned embodiments, the present disclosure also provides an apparatus for processing a sensing task. Since the apparatus for processing a sensing task provided in the embodiment of the present disclosure corresponds to the method for processing a sensing task provided in the above-mentioned embodiments, the implementations of the method for processing a sensing task is also applicable to the apparatus for processing a sensing task provided in the embodiments and will not be described in detail in the embodiments.

FIG. 10 is a block diagram of an apparatus 1000 for processing a sensing task according to an embodiment of the present disclosure. The apparatus 1000 for processing a sensing task may be applied in a first network element.

As shown in FIG. 10, the apparatus 1000 may include a receiving module 1010 and a processing module 1020.

The receiving module 1010 is configured to receive a sensing service request sent by a UE through an AMF, in which the sensing service request includes sensing service information of the sensing task.

The processing module 1020 is configured to obtain one or more pieces of first sensing capability information of one or more sensing nodes respectively, in which the one or more sensing nodes include at least one of a plurality of UEs and a plurality of base stations, a piece of first sensing capability information includes a first sensing capability feature of a respective sensing node, and the first sensing capability feature has a same feature type as a sensing service feature in the sensing service information.

The processing module 1020 is configured to determine at least one target sensing node in the sensing nodes according to the one or more pieces of first sensing capability information.

The processing module 1020 is configured to call the at least one target sensing node to execute the sensing task.

In some embodiments of the present disclosure, the processing module 1020 is configured to receive the one or more pieces of first sensing capability information matching the sensing service information and sent by the one or more sensing nodes through the AMF under a trigger by the sensing service information; or determine the one or more pieces of first sensing capability information matching the sensing service information, among one or more pieces of second sensing capability information proactively sent by the one or more sensing nodes, in which a piece of second sensing capability information includes all sensing capability features of a respective sensing node.

In some embodiments of the present disclosure, as shown in FIG. 10, the apparatus 1000 further includes a sending module 1030.

The sensing module 1030 is configured to send the sensing service information to the one or more sensing nodes through the AMF.

In some embodiments of the present disclosure, the processing module 1020 is configured to obtain the one or more pieces of second sensing capability information, in which the piece of second sensing capability information is sent by the respective sensing node through the AMF when a trigger condition is met.

In some embodiments of the present disclosure, the trigger condition includes at least one of: completion of initialization of a sensing node; reaching a sending cycle of the second sensing capability information; or a change in a sensing capability of a sensing node.

In some embodiments of the present disclosure, the processing module 1020 is configured to determining second sensing capability features having a same feature type as the sensing service feature, in the one or more pieces of second sensing capability information proactively sent by the one or more sensing nodes, as the one or more pieces of first sensing capability information.

In some embodiments of the present disclosure, the processing module 1020 is configured to divide the sensing task into at least one sensing subtask corresponding to the at least one target sensing node; and send a sensing subtask to a corresponding target sensing node through the AMF.

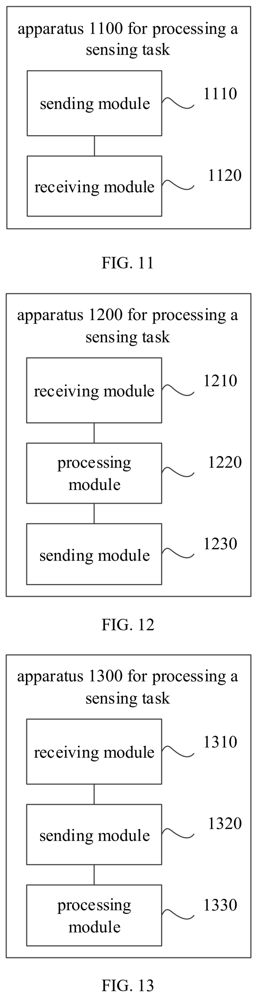

FIG. 11 is a block diagram of an apparatus 1100 for processing a sensing task according to an embodiment of the present disclosure. The apparatus 1100 for processing a sensing task may be applied in a sensing node.

The sending module 1110 is configured to send a piece of sensing capability information to a core network, so that a first network element determines at least one target sensing node from one or more sensing nodes according to pieces of sensing capability information, and calls the at least one target sensing node to execute the sensing task.

In some embodiments of the present disclosure, the sending module 1110 is configured to send first sensing capability information to the first network element through an AMF under a trigger by sensing service information, in which the first sensing capability information includes a first sensing capability feature of the sensing node, and the first sensing capability feature has a same feature type as a sensing service feature in the sensing service information; or send second sensing capability information to a second network element proactively through the AMF, in which the second sensing capability information is sent by the sensing node when a trigger condition is met, and the second sensing capability information includes all sensing capability features of the sensing node.

In some embodiments of the present disclosure, as shown in FIG. 11, the apparatus 1100 may include a receiving module 1120.

The receiving module 1120 is configured to receive the sensing service information sent by the first network element through the AMF.

In some embodiments of the present disclosure, the trigger condition includes at least one of: completion of initialization of a sensing node; reaching a sending cycle of the second sensing capability information; or a change in a sensing capability of a sensing node.

In some embodiments of the present disclosure, the receiving module 1120 is configured to receive a sensing subtask sent by the first network element through an AMF; and send a task processing result corresponding to the sensing subtask to the core network through the AMF.

FIG. 12 is a block diagram of an apparatus 1200 for processing a sensing task according to an embodiment of the present disclosure. The apparatus 1200 for processing a sensing task may be applied in a core network side.

As shown in FIG. 12, the apparatus 1200 may include a receiving module 1210 and a processing module 1220.

The receiving module 1210 is configured to receive a sensing service request sent by a UE, in which the sensing service request includes sensing service information of the sensing task.

The processing module 1220 is configured to obtain pieces of first sensing capability information of one or more sensing nodes, in which the one or more sensing nodes include at least one of a plurality of UEs and a plurality of base stations, a piece of first sensing capability information includes a first sensing capability feature of a respective sensing node, and the first sensing capability feature has a same feature type as a sensing service feature of the sensing service information.

The processing module 1220 is configured to determine at least one target sensing node in the one or more sensing nodes according to the one or more pieces of first sensing capability information.

The processing module 1220 is configured to call the at least one target sensing node to execute the sensing task.

In some embodiments of the present disclosure, the processing module 1220 is configured to receive the one or more pieces of first sensing capability information matching the sensing service information and sent by the one or more sensing nodes under a trigger by the sensing service information; or determine the one or more pieces of first sensing capability information matching the sensing service information, among one or more pieces of second sensing capability information proactively sent by the sensing node, in which a piece of second sensing capability information includes all sensing capability features of a respective sensing node.

In some embodiments of the present disclosure, as shown in FIG. 12, the apparatus 1200 may further include a sending module 1230.

The sending module 1230 is configured to send the sensing service information to the one or more sensing nodes.

In some embodiments of the present disclosure, the receiving module 1210 is configured to receive the one or more pieces of second sensing capability information proactively sent by the one or more sensing nodes, in which a piece of second sensing capability information is sent by a respective sensing node when a trigger condition is met.

In some embodiments of the present disclosure, the trigger condition includes at least one of: completion of initialization of a sensing node; reaching a sending cycle of the second sensing capability information; or a change in a sensing capability of a sensing node.

In some embodiments of the present disclosure, the processing module 1220 is configured to update stored one or more pieces of second sensing capability information corresponding respectively to the one or more sensing nodes.

FIG. 13 is a block diagram of an apparatus 1300 for processing a sensing task according to an embodiment of the present disclosure. The apparatus 1300 for processing a sensing task may be applied in a core network side.

As shown in FIG. 13, the apparatus 1300 may include a receiving module 1310, a sending module 1320 and a processing module 1330.

The receiving module 1310 is configured to receive, by a first network element through an AMF, a sensing service request sent by a UE, in which the sensing service request includes sensing service information of the sensing task.

The sending module 1320 is configured to send, by the first network element through the AMF, the sensing service information to one or more sensing nodes.

The receiving module 1310 is configured to receive, by the first network element, one or more pieces of first sensing capability information sent by the one or more sensing nodes, in which a piece of first sensing capability information is sent by a respective sensing node to the first network element through the AMF under a trigger by the sensing service information, the piece of first sensing capability information includes a first sensing capability feature of the respective sending node, and the first sensing capability feature has a same feature type as a sensing service feature in the sensing service information.

The processing module 1330 is configured to determine, by the first network element, at least one target sensing node in the one or more sensing nodes according to the one or more pieces of first sensing capability information.

The processing module 1330 is configured to call, by the first network element, the at least one target sensing node to execute the sensing task.

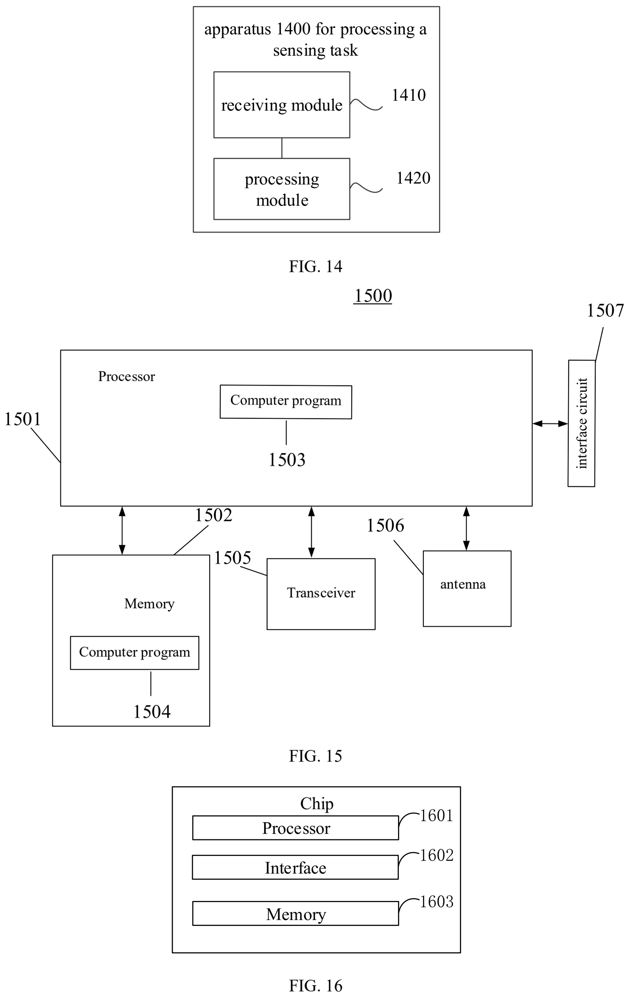

FIG. 14 is a block diagram of an apparatus 1400 for processing a sensing task according to an embodiment of the present disclosure. The apparatus 1400 for processing a sensing task may be applied in a core network side.

As shown in FIG. 14, the apparatus 1400 may include a receiving module 1410 and a processing module 1420.

The receiving module 1410 is configured to receive, by a first network element through an AMF, a sensing service request sent by a UE, in which the sensing service request includes sensing service information of the sensing task.

The receiving module 1410 is configured to receive, by a second network element through the AMF, one or more pieces of second sensing capability information sent by one or more sensing nodes, in which a piece of second sensing capability information is sent by a respective sensing node when a trigger condition is met, and the piece of second sensing capability information comprises all sensing capability features of the respective sensing node.

The processing module 1420 is configured to obtain, by the first network element, the one or more pieces of second sensing capability information from the second network element, and determine one or more pieces of first sensing capability information matching the sensing service information, among the one or more pieces of second sensing capability information, in which a piece of first sensing capability information includes a first sensing capability feature of the respective sensing node, and the first sensing capability feature has a same feature type as a sensing service feature in the sensing service information.

The processing module 1420 is configured to determine, by the first network element, at least one target sensing node in the one or more sensing nodes according to the one or more pieces of first sensing capability information.

The processing module 1420 is configured to call, by the first network element, the at least one target sensing node to execute the sensing task.

FIG. 15 is a block diagram of a communication apparatus 1500 according to an embodiment of the present disclosure. The communication apparatus 1500 may be a network device, or may be a user equipment, or may be a chip, a chip system, a processor, etc. that supports the network device to implement the method, or may be a chip, a chip system, a processor, etc. that supports the UE to implement the method. The apparatus may be used to implement the method in the above method embodiments. For details, please refer to the above method embodiments.

The communication apparatus 1500 may include one or more processors 1501. The processor 1501 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 1500 may also include one or more memories 1502 for storing the computer program 1504. The processor 1501 executes the computer program 1504, to cause the communication apparatus 1500 to implement the method in the above method embodiments. Optionally, the memory 1502 may also store data. The communication apparatus 1500 and the memory 1502 may be set up separately or integrated together.

Optionally, the communication apparatus 1500 may also include a transceiver 1505 and an antenna 1506. The transceiver 1505 may be called a transceiver unit, a transceiver machine, or a transceiver circuit, etc., to implement the receiving and sending function. The transceiver 1505 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 1500 may also include one or more interface circuits 1507. The interface circuit 1507 is used to receive code instructions and transmit the code instructions to the processor 1501. The processor 1501 runs the code instructions to cause the communication apparatus 1500 to implement the method in the above method embodiment.

In an implementation, the processor 1501 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In an implementation, the processor 1501 may store a computer program 1503. When the computer program 1503 is running on the processor 1501, the communication apparatus 1500 is caused to implement the method in the above method embodiments. The computer program 1503 may be solidified in the processor 1501, in which case the processor 1501 may be implemented in hardware.

In an implementation, the communication apparatus 1500 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a UE, but the scope of the communication apparatus in the disclosure is not limited to this, and the structure of the communication apparatus may not be restricted by FIG. 15. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the structural diagram of a chip in FIG. 16. The chip shown in FIG. 16 includes a processor 1601 and an interface 1602. There may be one or more processors 1601, and there may be one or more interfaces 1602.

Optionally, the chip also includes a memory 1603, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

The present disclosure proposes a method and an apparatus for processing a sensing task, which provides a method for reporting sensing capabilities in a 6G core network, so that the core network may accurately and efficiently select a sensing node to provide sensing services for a specific sensing task.

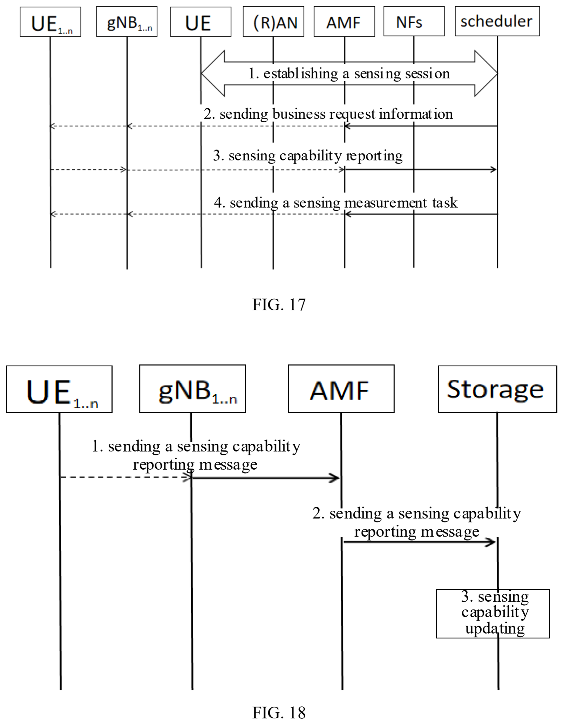

Based on the present disclosure, the embodiments of the present disclosure are as follows.
1. UE and gNB sensing capability reporting procedure triggered by businesses (as shown in FIG. 17)
   1) The UE sends a sensing business request (i.e., sensing service request) to the core network, and the request information includes sensing service information (SUPI, business type, business requirements, etc.).
      The core network establishes a sensing session based on the sensing service information.
   2) The Scheduler network element (i.e., the first network element) sends the sensing service feature (such as the task feature contained in the sensing service information, such as sensing distance, sensing accuracy, sensing resolution, and sensing delay) to the AMF based on the sensing service information. The AMF sends the sensing service information to one or more gNBs and UEs (i.e., sensing nodes).
   3) The UE and the gNB report their sensing capabilities (i.e., the first sensing capability information) to the AMF, and the AMF sends the sensing capabilities to the Scheduler network element.
   4) The Scheduler network element determines whether to select the UE or the gNB as a sensing measurement node based on the sensing capabilities reported by the UE and the gNB.
      After the sensing measurement node is selected, the Scheduler network element sends information such as a magnitude of a sensing measurement configuration parameter to the AMF, and the AMF sends the information to the corresponding sensing measurement node to execute the sensing measurement task and execute subsequent sensing business procedures.
2. sensing capability reporting procedure initiated by the UE and the gNB (as shown in FIG. 18)
   1) The UE and the gNB (i.e., sensing node) report their sensing capabilities to the core network and send sensing capability reporting messages to the AMF. The messages may include the UE and gNB's sensing distances, sensing accuracies, sensing resolutions, sensing delays and other capability information (i.e., second sensing capability information). The condition for initiating the sensing capability reporting procedure will be described as follows.
      1a.The UE and the gNB initialize and report their sensing capabilities.
      1b.The UE and the gNB periodically report their sensing capabilities.
      1c. When the UE or gNB's sensing capabilities change, the updated sensing capabilities are reported.
   2) The AMF sends the sensing capability reporting message to the Storage network element.
   3) The Storage network element updates the sensing capabilities of the UE and the gNB to which the message belongs.

In summary, the present disclosure has the following beneficial effects: the sensing node may send corresponding sensing capability information to the first network element, so that the first network element may accurately and efficiently select the corresponding sensing node providing sensing services for a specific sensing task based on the sensing capability information, which can meet new businesses that may emerge in the 6G era and high-quality requirements for data and computing power.

The implementations or embodiments of the present disclosure are not exhaustive, but are only illustrative, and are not intended to be a specific limitation on the protection scope of the present disclosure. In the absence of contradiction, each step in a certain implementation or embodiment can be implemented as an independent embodiment, and respective steps can be arbitrarily combined. For example, a solution after removing some steps in a certain implementation or embodiment can also be implemented as an independent embodiment, and the order of the steps in a certain implementation or embodiment can be arbitrarily exchanged. In addition, the optional examples in a certain implementation or embodiment can be arbitrarily combined; in addition, respective implementations or embodiments can be arbitrarily combined, for example, some or all steps of different implementations or embodiments can be arbitrarily combined, and a certain implementation or embodiment can be arbitrarily combined with the optional implementations of other embodiments.

In some implementations or embodiments, the terms such as "in response to...", "in response to determining...", "in the case of...", "at the time of...", "when...", "if...", "provide that...", etc. can be used interchangeably.

In some implementations or embodiments, descriptions such as "A or B...", "A and/or B...", "at least one of A, B...", "in one case, A; in another case, B", "in response to one case, A; in response to another case, B", etc. may include the following technical solutions according to situations: A is executed independently of B, that is, in some embodiments, A;(B is executed independently of A, that is, in some embodiments, B; A and B are selectively executed, that is in some embodiments, one is selected from A and B to be executed; both A and B are executed, that is, in some embodiments, A and B.

In some implementations or embodiments, "including A", "comprising A", "used to indicate A", and "carrying A" can be interpreted as directly carrying A or indirectly indicating A.

In addition, each element, each row, or each column in the table involved in the present disclosure can be implemented as an independent embodiment, and the combination of any elements, any rows, and any columns can also be implemented as an independent embodiment.

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

As used herein, the terms "machine-readable medium" and "computer-readable medium" refer to any computer program product, device, and/or apparatus (e.g., disk, optical disk, memory, programmable logic device (PLD)) for providing machine instructions and/or data to a programmable processor, including a machine-readable medium that receives machine instructions as machine-readable signals. The term "machine-readable signal" refers to any signal for providing machine instructions and/or data to a programmable processor.

The systems and techniques described herein may be implemented in a computing system that includes back-end components (e.g., as a data server), or a computing system that includes middleware components (e.g., an application server), or a computing system that includes front-end components (e.g., a user computer with a graphical user interface or a web browser through which a user can interact with implementations of the systems and techniques described herein), or a computing system that includes any combination of such back-end components, middleware components, or front-end components. The components of the system may be interconnected by any form or medium of digital data communication (e.g., a communication network). Examples of communication networks include: a local area network (LAN), a wide area network (WAN), and the Internet.

A computer system may include a client and a server. The client and the server are generally remote from each other and usually interact through a communication network. The client-server relationship is generated by computer programs running on respective computers and having a client-server relationship to each other.

In some embodiments, the apparatus, etc. can be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" can be used interchangeably.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, the access network device, the core network device, or the network device can be replaced by the terminal. For example, various embodiments of the present disclosure can also be applied to a structure in which the communication between the access network device, the core network device, or the network device and the terminal is replaced by the communication between multiple terminals (for example, it can also be referred to as device-to-device (D2D), vehicle-to-everything (V2X), etc.). In this case, the terminal can be set to have a structure that has all or part of functions of the access network device. In addition, the terms such as "uplink" and "downlink" can also be replaced by the terms corresponding to the communication between the terminals (for example, "side"). For example, the uplink channel, the downlink channel, etc. can be replaced by the side channel, and the uplink, the downlink, etc. can be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" can be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like can be used interchangeably.

In some embodiments, the terms such as "frame", "radio frame", "subframe", "slot", "sub-slot", "mini-slot", "symbol", "symbol", "transmission time interval (TTI)" and so on can be used interchangeably.

In some embodiments, "obtain", "acquire", "get", "receive", "transmit", "bidirectional transmission", "send and/or receive" can be interchangeable, and can be interpreted as receiving from other entities, obtaining from a protocol, obtaining by self-processing, autonomous implementation, etc.

In some embodiments, the terms such as "send", "transmit", "report", "issue", "transmit", "bi-directionally transmit", "send and/or receive" and the like can be used interchangeably.

In some embodiments, "predetermined" or "preset" may be interpreted as being pre-specified in a protocol, etc., or may be interpreted as an apparatus performing a pre-set action, etc.

In some embodiments, "determining" can be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

It should be understood that the various forms of processes shown above can be used to reorder, add or delete steps. For example, the steps recorded in the present disclosure can be executed in parallel, sequentially or in different orders, as long as the desired results of the technical solutions disclosed in the present disclosure can be achieved, which is not limited herein.

In addition, it should be understood that the various embodiments of the present disclosure may be implemented individually or in combination with other embodiments when the solution permits.

Those of ordinary skill in the art will appreciate that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered to be beyond the scope of this application.

Those skilled in the art can clearly understand that, for the convenience and brevity of description, regarding the specific working processes of the systems, devices and units described above, reference may be made to the corresponding processes in the aforementioned method embodiments and will not be repeated here.

The above are only specific implementations of the present disclosure, but the protection scope of the present disclosure is not limited thereto. Any technician familiar with the technical field can easily think of changes or substitutions within the technical scope disclosed in the present disclosure, which should be included in the protection scope of the present disclosure. Therefore, the protection scope of the present disclosure should be based on the protection scope of the claims.

## Claims

1. A method for processing a sensing task, performed by a first network element, comprising:
receiving a sensing service request sent by a user equipment (UE) through an access and mobility management function (AMF), wherein the sensing service request comprises sensing service information of the sensing task;
obtaining one or more pieces of first sensing capability information of one or more sensing nodes respectively, wherein the one or more sensing nodes comprise at least one of a plurality of UEs and a plurality of base stations, a piece of first sensing capability information comprises a first sensing capability feature of a respective sensing node, and the first sensing capability feature has a same feature type as a sensing service feature in the sensing service information;
determining at least one target sensing node in the one or more sensing nodes according to the one or more pieces of first sensing capability information; and
calling the at least one target sensing node to execute the sensing task.

2. The method of claim 1, wherein obtaining the one or more pieces of first sensing capability information of the one or more sensing nodes comprises at least one of:
receiving the one or more pieces of first sensing capability information matching the sensing service information and sent by the one or more sensing nodes through the AMF under a trigger by the sensing service information; or
determining the one or more pieces of first sensing capability information matching the sensing service information, among one or more pieces of second sensing capability information proactively sent by the one or more sensing nodes, wherein a piece of second sensing capability information comprises all sensing capability features of a respective sensing node.

3. The method of claim 2, wherein before receiving the one or more pieces of first sensing capability information matching the sensing service information and sent by the one or more sensing nodes through the AMF under the trigger by the sensing service information, the method further comprises:
sending the sensing service information to the one or more sensing nodes through the AMF.

4. The method of claim 2, wherein before determining the one or more pieces of first sensing capability information matching the sensing service information, among the one or more pieces of second sensing capability information proactively sent by the one or more sensing nodes, the method further comprises:
obtaining the one or more pieces of second sensing capability information, wherein the piece of second sensing capability information is sent by the respective sensing node through the AMF when a trigger condition is met.

5. The method of claim 4, wherein the trigger condition comprises at least one of:
completion of initialization of a sensing node;
reaching a sending cycle of the second sensing capability information; or
a change in a sensing capability of a sensing node.

6. The method of claim 4, wherein determining the one or more pieces of first sensing capability information matching the sensing service information, among the one or more pieces of second sensing capability information proactively sent by the one or more sensing nodes, comprises:
determining second sensing capability features having a same feature type as the sensing service feature, in the one or more pieces of second sensing capability information proactively sent by the one or more sensing nodes, as the one or more pieces of first sensing capability information.

7. The method of any of claims 1-6, wherein calling the at least one target sensing node to execute the sensing task comprises:
dividing the sensing task into at least one sensing subtask corresponding to the at least one target sensing node; and
sending a sensing subtask to a corresponding target sensing node through the AMF.

8. A method for processing a sensing task, performed by a sensing node, comprising:
sending a piece of sensing capability information to a core network, so that a first network element determines at least one target sensing node from one or more sensing nodes according to pieces of sensing capability information, and calls the at least one target sensing node to execute the sensing task.

9. The method of claim 8, wherein sending the piece of sensing capability information to the core network comprises at least one of:
sending first sensing capability information to the first network element through an AMF under a trigger by sensing service information, wherein the first sensing capability information comprises a first sensing capability feature of the sensing node, and the first sensing capability feature has a same feature type as a sensing service feature in the sensing service information; or
sending second sensing capability information to a second network element proactively through the AMF, wherein the second sensing capability information is sent by the sensing node when a trigger condition is met, and the second sensing capability information comprises all sensing capability features of the sensing node.

10. The method of claim 9, wherein before sending first sensing capability information to the first network element through an AMF under a trigger by sensing service information, the method further comprises:
receiving the sensing service information sent by the first network element through the AMF.

11. The method of claim 9, wherein the trigger condition comprises at least one of:
completion of initialization of a sensing node;
reaching a sending cycle of the second sensing capability information; or
a change in a sensing capability of a sensing node.

12. The method of any of claims 8-11, further comprising:
receiving a sensing subtask sent by the first network element through an AMF; and
sending a task processing result corresponding to the sensing subtask to the core network through the AMF.

13. A method for processing a sensing task, performed by a core network, comprising:
receiving a sensing service request sent by a user equipment (UE), wherein the sensing service request comprises sensing service information of the sensing task;
obtaining one or more pieces of first sensing capability information of one or more sensing nodes, wherein the one or more sensing nodes comprise at least one of a plurality of UEs and a plurality of base stations, a piece of first sensing capability information comprises a first sensing capability feature of a respective sensing node, and the first sensing capability feature has a same feature type as a sensing service feature of the sensing service information;
determining at least one target sensing node in the one or more sensing nodes according to the one or more pieces of first sensing capability information; and
calling the at least one target sensing node to execute the sensing task.

14. The method of claim 13, wherein obtaining the one or more pieces of first sensing capability information of the one or more sensing nodes comprises at least one of:
receiving the one or more pieces of first sensing capability information matching the sensing service information and sent by the one or more sensing nodes under a trigger by the sensing service information; or
determining the one or more pieces of first sensing capability information matching the sensing service information, among one or more pieces of second sensing capability information proactively sent by the one or more sensing nodes, wherein a piece of second sensing capability information comprises all sensing capability features of a respective sensing node.

15. The method of claim 14, wherein before receiving the one or more pieces of first sensing capability information matching the sensing service information and sent by the one or more sensing nodes under a trigger by the sensing service information, the method further comprises:
sending the sensing service information to the one or more sensing nodes.

16. The method of claim 14, wherein before determining the one or more pieces of first sensing capability information matching the sensing service information, among the one or more pieces of second sensing capability information proactively sent by the one or more sensing nodes, the method further comprises:
receiving the one or more pieces of second sensing capability information proactively sent by the one or more sensing nodes, wherein a piece of second sensing capability information is sent by a respective sensing node when a trigger condition is met.

17. The method of claim 16, wherein the trigger condition comprises at least one of:
completion of initialization of a sensing node;
reaching a sending cycle of the second sensing capability information; or
a change in a sensing capability of a sensing node.

18. The method of claim 16, wherein after receiving the one or more pieces of second sensing capability information proactively sent by the one or more sensing nodes, the method further comprises:
updating stored one or more pieces of second sensing capability information corresponding respectively to the one or more sensing nodes.

19. A method for processing a sensing task, comprising:
receiving, by a first network element through an access and mobility management function (AMF), a sensing service request sent by a user equipment (UE), wherein the sensing service request comprises sensing service information of the sensing task;
sending, by the first network element through the AMF, the sensing service information to one or more sensing nodes;
receiving, by the first network element, one or more pieces of first sensing capability information sent by the one or more sensing nodes, wherein a piece of first sensing capability information is sent by a respective sensing node to the first network element through the AMF under a trigger by the sensing service information, the piece of first sensing capability information comprises a first sensing capability feature of the respective sending node, and the first sensing capability feature has a same feature type as a sensing service feature in the sensing service information;
determining, by the first network element, at least one target sensing node in the one or more sensing nodes according to the one or more pieces of first sensing capability information; and
calling, by the first network element, the at least one target sensing node to execute the sensing task.

20. A method for processing a sensing task, comprising:
receiving, by a first network element through an access and mobility management function (AMF), a sensing service request sent by a user equipment (UE), wherein the sensing service request comprises sensing service information of the sensing task;
receiving, by a second network element through the AMF, one or more pieces of second sensing capability information sent by one or more sensing nodes, wherein a piece of second sensing capability information is sent by a respective sensing node when a trigger condition is met, and the piece of second sensing capability information comprises all sensing capability features of the respective sensing node;
obtaining, by the first network element, the one or more pieces of second sensing capability information from the second network element, and determining one or more pieces of first sensing capability information matching the sensing service information, among the one or more pieces of second sensing capability information, wherein a piece of first sensing capability information comprises a first sensing capability feature of the respective sensing node, and the first sensing capability feature has a same feature type as a sensing service feature in the sensing service information;
determining, by the first network element, at least one target sensing node in the one or more sensing nodes according to the one or more pieces of first sensing capability information; and
calling, by the first network element, the at least one target sensing node to execute the sensing task.

21. An apparatus for processing a sensing task, applied in a first network element, comprising:
a receiving module, configured to receive a sensing service request sent by a user equipment (UE) through an access and mobility management function (AMF), wherein the sensing service request comprises sensing service information of the sensing task; and
a processing module, configured to:
obtain one or more pieces of first sensing capability information of one or more sensing nodes respectively, wherein the one or more sensing nodes comprise at least one of a plurality of UEs and a plurality of base stations, a piece of first sensing capability information comprises a first sensing capability feature of a respective sensing node, and the first sensing capability feature has a same feature type as a sensing service feature in the sensing service information;
determine at least one target sensing node in the one or more sensing nodes according to the one or more pieces of first sensing capability information; and
call the at least one target sensing node to execute the sensing task.

22. An apparatus for processing a sensing task, applied in a sensing node, comprising:
a sensing module, configured to send a piece of sensing capability information to a core network, so that a first network element determines at least one target sensing node from one or more sensing nodes according to pieces of sensing capability information, and calls the at least one target sensing node to execute the sensing task.

23. An apparatus for processing a sensing task, applied in a core network, comprising:
a receiving module, configured to receive a sensing service request sent by a user equipment (UE), wherein the sensing service request comprises sensing service information of the sensing task; and
a processing module, configured to:
obtain one or more pieces of first sensing capability information of one or more sensing nodes, wherein the one or more sensing nodes comprise at least one of a plurality of UEs and a plurality of base stations, a piece of first sensing capability information comprises a first sensing capability feature of a respective sensing node, and the first sensing capability feature has a same feature type as a sensing service feature of the sensing service information;
determine at least one target sensing node in the one or more sensing nodes according to the one or more pieces of first sensing capability information; and
calling the at least one target sensing node to execute the sensing task.

24. An apparatus for processing a sensing task, comprising: a receiving module, a sending module, and a processing module; wherein,
the receiving module is configured for a first network element to receive through an access and mobility management function (AMF), a sensing service request sent by a user equipment (UE), wherein the sensing service request comprises sensing service information of the sensing task;
the sending module is configured for the first network element to send through the AMF, the sensing service information to one or more sensing nodes;
the receiving module is configured for the first network element to receive one or more pieces of first sensing capability information sent by the one or more sensing nodes, wherein a piece of first sensing capability information is sent by a respective sensing node to the first network element through the AMF under a trigger by the sensing service information, the piece of first sensing capability information comprises a first sensing capability feature of the respective sending node, and the first sensing capability feature has a same feature type as a sensing service feature in the sensing service information;
the processing module is configured for the first network element to determine at least one target sensing node in the one or more sensing nodes according to the one or more pieces of first sensing capability information; and
the processing module is configured for the first network element to call the at least one target sensing node to execute the sensing task.

25. An apparatus for processing a sensing task, comprising: a receiving module, and a processing module; wherein,
the receiving module is configured for a first network element to receive through an access and mobility management function (AMF), a sensing service request sent by a user equipment (UE), wherein the sensing service request comprises sensing service information of the sensing task;
the receiving module is configured for a second network element to receive through the AMF, one or more pieces of second sensing capability information sent by one or more sensing nodes, wherein a piece of second sensing capability information is sent by a respective sensing node when a trigger condition is met, and the piece of second sensing capability information comprises all sensing capability features of the respective sensing node;
the processing module is configured for the first network element to obtain the one or more pieces of second sensing capability information from the second network element, and determine one or more pieces of first sensing capability information matching the sensing service information, among the one or more pieces of second sensing capability information, wherein a piece of first sensing capability information comprises a first sensing capability feature of the respective sensing node, and the first sensing capability feature has a same feature type as a sensing service feature in the sensing service information;
the processing module is configured for the first network element to determine at least one target sensing node in the one or more sensing nodes according to the one or more pieces of first sensing capability information; and
the processing module is configured for the first network element to call the at least one target sensing node to execute the sensing task.

26. A communication device, comprising: a transceiver; a memory; and a processor, connected to the transceiver and the memory respectively, configured to control the transceiver to transmit and receive wireless signals by executing computer executable instructions on the memory, and capable of implementing the method of any of claims 1-7.

27. A core network device, comprising: a transceiver; a memory; and a processor, connected to the transceiver and the memory respectively, configured to control the transceiver to transmit and receive wireless signals by executing computer executable instructions on the memory, and capable of implementing the method of any of claims 13-18.

28. A communication system, comprising: a transceiver; a memory; and a processor, connected to the transceiver and the memory respectively, configured to control the transceiver to transmit and receive wireless signals by executing computer executable instructions on the memory, and capable of implementing the method of claim 19 or 20.
